(19) Europäisches Patentamt
European Patent Office
Office européen des brevets

(11) **EP 2 239 037 B1**

(12) **EUROPEAN PATENT SPECIFICATION**

(45) Date of publication and mention
of the grant of the patent:
**19.06.2013  Bulletin 2013/25**

(51) Int Cl.:
***C04B 35/101*** *(2006.01)*   ***C04B 35/14*** *(2006.01)*

(21) Application number: **10250482.6**

(22) Date of filing: **15.03.2010**

(54) **Method of producing honeycomb structure and method of producing honeycomb catalyst body**

Verfahren zur Herstellung einer Wabenstruktur und Verfahren zur Herstellung eines wabenförmigen Katalysatorkörpers

Procédé de fabrication de structure en nid d'abeille et procédé de formation d'un corps de catalyseur en nid d'abeille

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.03.2009  JP 2009072382**

(43) Date of publication of application:
**13.10.2010  Bulletin 2010/41**

(73) Proprietor: **NGK Insulators, Ltd.**
**Nagoya-city, Aichi 467-8530 (JP)**

(72) Inventors:
• **Saito, Chika**
**Nagoya-city, Aichi-ken 467-8530 (JP)**
• **Hirose, Syogo**
**Nagoya-city, Aichi-ken 467-8530 (JP)**

• **Kuki, Tatsuyuki**
**Nagoya-city, Aichi-ken 467-8530 (JP)**
• **Miyairi, Yukio**
**Nagoya-city, Aichi-ken 467-8530 (JP)**
• **Harada, Masashi**
**Nagoya-city, Aichi-ken 467-8530 (JP)**
• **Noguchi, Yasushi**
**Nagoya-city, Aichi-ken 467-8530 (JP)**

(74) Representative: **Paget, Hugh Charles Edward et al**
**Mewburn Ellis LLP**
**33 Gutter Lane**
**London**
**EC2V 8AS (GB)**

(56) References cited:
**EP-A2- 2 103 337     GB-A- 2 071 639**
**US-B1- 6 242 072**

**Description**

BACKGROUND OF THE INVENTION

The present invention relates to a method of producing a honeycomb structure and a method of producing a honeycomb catalyst body. More particularly, the present invention relates to a method of producing a honeycomb structure used as a material (support) for a honeycomb catalyst body that effectively purifies toxic substances (e.g., carbon monoxide (CO), hydrocarbons (HC), nitrogen oxides (NOx), sulfur oxides (SOx), and particulate matter (PM)) contained in exhaust gas discharged from an automobile engine, a construction machine engine, an industrial stationary engine, a combustion apparatus, and the like, and a method of producing a honeycomb catalyst body.

A catalyst body having a honeycomb structure (i.e., honeycomb catalyst body) has been used to purify exhaust gas discharged from an engine or the like. The honeycomb catalyst body has a structure in which a catalyst layer is supported on the surface of a partition wall that forms cells. When purifying exhaust gas using such a honeycomb catalyst body (honeycomb structure), exhaust gas that has entered the cells of the honeycomb catalyst body through one end face of the honeycomb catalyst body comes in contact with the catalyst layer formed on the surface of the partition wall, and is discharged to the outside of the honeycomb catalyst body through the other end face of the honeycomb catalyst body (refer to JP-A-2003-33664, for example).

In this case, it is necessary to improve the purification efficiency by allowing the purification target components contained in exhaust gas to be transferred to the catalyst layer formed on the surface of the partition wall as efficiently as possible. The exhaust gas purification efficiency can be improved by reducing the hydraulic diameter of the cells and increasing the surface area of the partition wall. For example, the number of cells (cell density) per unit area is increased. However, particulate matter contained in exhaust gas cannot be advantageously removed when using the above method. Therefore, the end faces of the honeycomb catalyst body may be alternately plugged so that exhaust gas passes through the partition wall (refer to JP-A-2001-269585, for example).

SUMMARY OF THE INVENTION

The transfer rate of the purification target components from exhaust gas to the catalyst layer formed on the surface of the partition wall increases in inverse proportion to the square of the hydraulic diameter of the cells. Specifically, the transfer rate of the purification target components increases as the cell density increases. On the other hand, the pressure loss when exhaust gas passes through the cells tends to increase in inverse proportion to the square of the hydraulic diameter of the cells. Therefore, the pressure loss increases along with an increase in the transfer rate of the purification target components. An increase in pressure loss may be suppressed by reducing the thickness of the partition wall of the honeycomb structure. However, the strength of the partition wall decreases as a result of reducing the thickness of the partition wall.

The honeycomb catalyst body disclosed in JP-A-2003-33664 and the filter disclosed in JP-A-2001-269585 are not satisfactory from the viewpoint of a reduction in thickness and an increase in strength of the partition wall. Therefore, development of a honeycomb catalyst body having a thin partition wall, i.e., a honeycomb structure that allows the partition wall to have a sufficient strength and a reduced thickness, shows a low pressure loss, and exhibits a high particulate matter collection efficiency and a high exhaust gas purification efficiency, has been desired.

The present invention was conceived in view of the above problems. An object of the present invention is to provide a method of producing a honeycomb structure that allows the partition wall to have a sufficient strength and a reduced thickness, shows a low pressure loss, and exhibits a high particulate matter collection efficiency and a high exhaust gas purification efficiency, and a method of producing a honeycomb catalyst body.

According to the present invention, the following method of producing a honeycomb structure and the following method of producing a honeycomb catalyst body are provided.

[1] A method of producing a honeycomb structure comprising:

a first step that includes filling large pores formed in a primary fired body with a filling slurry that contains filling particles having an average particle size of 5 to 50 $\mu$m, the primary fired body including a porous partition wall that has a number of large pores having an average pore size of 100 to 300 $\mu$m, and a plurality of cells that are defined by the partition wall and extend between two end faces of the primary fired body, and firing the primary fired body to obtain a secondary fired body that includes a porous partition wall that has a number of pores having an average pore size smaller than that of the large pores, and a plurality of cells that are defined by the partition wall and extend between two end faces of the secondary fired body; and
a second step that includes plugging the plurality of cells of the secondary fired body on either of the end faces or inside the plurality of cells to form plugging sections to obtain a honeycomb structure that includes the partition wall and the plugging sections, the partition wall having a thickness of 76.2 to 177.8 $\mu$m, an average pore size of 8 to 30 $\mu$m, and a porosity of 10 to 35%.

[2] The method according to [1], wherein the honeycomb structure has a cell density of 12.4 to 45.0 cells/cm$^2$.

[3] The method according to [1] or [2], wherein the honeycomb structure has a ratio of the total open area of the cells to the sum of the cross-sectional area of the partition wall and the total open area of the cells in a cross section perpendicular to a cell extension direction of 83 to 90%.

[4] The method according to any one of [1] to [3], wherein the partition wall of the honeycomb structure has a permeability of $1 \times 10^{12}$ to $6 \times 10^{-12}$ m$^2$.

[5] The method according to any one of [1] to [4], wherein the hydraulic diameter (m) of the cells of the honeycomb structure and the permeability (m$^2$) of the partition wall of the honeycomb structure satisfy the relationship "(hydraulic diameter of cells)$^2$ / (permeability) = $1.0 \times 10^5$ to $4.5 \times 10^6$".

[6] The method according to any one of [1] to [5], wherein the honeycomb structure is formed of a material that contains at least one ceramic selected from the group consisting of cordierite, aluminum titanate, silicon carbide, sialon, mullite, silicon nitride, zirconium phosphate, zirconia, titania, alumina, and silica.

[7] The method according to any one of [1] to [6], wherein the honeycomb structure has a thermal expansion coefficient of $1.0 \times 10^{-6}$/°C or less measured at 40 to 800°C in the cell extension direction.

[8] A method of producing a honeycomb catalyst body comprising: a third step that includes applying a catalyst slurry that contains an organic pore-forming material and a catalyst to the surface of a partition wall of a honeycomb structure produced by the method according to any one of [1] to [7], and heating the honeycomb structure to obtain a honeycomb catalyst body that includes the honeycomb structure and a catalyst layer that contains the catalyst and is supported on the surface of the partition wall of the honeycomb structure.

[9] The method according to [8], wherein the catalyst is an oxidizing catalyst that contains at least one of platinum and palladium, and cerium oxide.

[10] The method according to [8], wherein the catalyst is a three-way catalyst that contains at least one noble metal selected from the group consisting of platinum, rhodium, and palladium, and a promoter that contains at least one of cerium oxide and zirconium oxide.

[11] The method according to [8], wherein the catalyst is a NOx occlusion/reduction catalyst that contains at least one of an alkali metal and an alkaline earth metal.

[12] The method according to any one of [8] to [11], wherein the catalyst slurry further contains a promoter that contains at least one compound selected from the group consisting of alumina, zirconia, and ceria, and a holding material that holds the catalyst and the promoter.

[13] The method according to any one of [8] to [12], wherein the catalyst layer of the honeycomb catalyst body has a density of 80 to 400 g/ L.

The method of producing a honeycomb structure according to the present invention can produce a honeycomb structure that allows the partition wall to have a sufficient strength and a reduced thickness, shows a low pressure loss, and exhibits a high particulate matter collection efficiency and a high exhaust gas purification efficiency.

The method of producing a honeycomb catalyst body according to the present invention can produce a honeycomb catalyst body that allows the partition wall to have a sufficient strength and a reduced thickness, shows a low pressure loss, and exhibits a high particulate matter collection efficiency and a high exhaust gas purification efficiency.

BRIEF DESCRIPTION OF THE DRAWINGS

FIG. 1 is an enlarged cross-sectional view showing part of a secondary fired body obtained by one step of a method of producing a honeycomb structure according to one embodiment of the present invention.

FIG. 2 is a front view schematically showing a honeycomb structure obtained by a method of producing a honeycomb structure according to one embodiment of the present invention.

FIG. 3 is a cross-sectional view of the honeycomb structure shown in FIG. 2 along the cell extension direction.

FIG. 4 is a cross-sectional view (corresponding to FIG 3) schematically showing a honeycomb structure obtained by a method of producing a honeycomb structure according to another embodiment of the present invention.

FIG. 5 is a cross-sectional view schematically showing a honeycomb catalyst body obtained by a method of producing a honeycomb catalyst body according to one embodiment of the present invention.

FIG. 6 is an enlarged schematic view showing the partition wall of the honeycomb catalyst body shown in FIG 5.

FIG. 7 is a schematic view illustrative of a specimen used to measure the permeability.

DESCRIPTION OF PREFERRED EMBODIMENTS

Embodiments of the present invention are described below. Note that the present invention is not limited to the following embodiments. Various modifications, improvements, and the like may be appropriately made of the following embodiments without departing from the scope of the present invention based on the knowledge of a person skilled in the art.

[1] Method of producing honeycomb structure

A method of producing a honeycomb structure according to one embodiment of the present invention includes a first step that includes filling large pores formed in a primary fired body with a filling slurry that contains filling particles having an average particle size of 5 to 50 $\mu$m, the primary fired body including a porous partition wall that has a number of large pores having an average pore size of 100 to 300 $\mu$m, and a plurality of cells that are defined by the partition wall and extend between two end faces of the primary fired body, and firing the primary fired body to obtain a secondary fired body that includes a porous partition wall that has a number of pores having an average pore size smaller than that of the large pores, and a plurality of cells that are defined by the partition wall and extend between two end faces of the secondary fired body, and a second step that includes plugging the plurality of cells of the secondary fired body on either of the end faces or inside the plurality of cells to form plugging sections to obtain a honeycomb structure that includes the partition wall and the plugging sections, the partition wall having a thickness of 76.2 to 177.8 $\mu$m, an average pore size of 8 to 30 $\mu$m, and a porosity of 10 to 35%. A honeycomb structure that allows the partition wall to have a sufficient strength and a reduced thickness, shows a low pressure loss, and exhibits a high particulate matter collection efficiency and a high exhaust gas purification efficiency, can be produced by the above steps.

A wall-flow filter has been known as an exhaust gas purification apparatus. The wall-flow filter includes a plurality of cells that extend from an inlet end face (one end face) to an outlet end face (the other end face), and a plurality of plugging sections that plug the cells alternately on the inlet end face and the outlet end face. The wall-flow filter is widely used due to low pressure loss and high particulate matter collection efficiency. However, a pressure loss necessarily occurs even when using the wall-flow filter. Therefore, the cell open frontal area (OFA) described later is increased to reduce the pressure loss.

It is necessary to reduce the thickness of the partition wall in order to increase the cell open frontal area. However, the strength of the partition wall necessarily decreases as a result of reducing the thickness of the partition wall. When the porosity of the partition wall is reduced to achieve a sufficient strength, the gas permeability of the partition wall decreases so that the pressure loss increases.

According to the honeycomb structure produced by the method according to the present invention, the porosity of the partition wall is reduced to achieve a sufficient strength. Moreover, the flow resistance of the partition wall can be reduced by moderately increasing the pore size (average pore size) while maintaining the reduced porosity. Therefore, the honeycomb structure allows the partition wall to have a sufficient strength and a reduced thickness, shows a low pressure loss, and exhibits a high particulate matter collection efficiency and a high exhaust gas purification efficiency.

[1-1] First step

The first step includes filling large pores formed in a primary fired body with a filling slurry that contains filling particles having an average particle size of 5 to 50 $\mu$m, the primary fired body including a porous partition wall that has a number of large pores having an average pore size of 100 to 300 $\mu$m, and a plurality of cells that are defined by the partition wall and extend between two end faces of the primary fired body, and firing the primary fired body to obtain a secondary fired body that includes a porous partition wall that has a number of pores having an average pore size smaller than that of the large pores, and a plurality of cells that are defined by the partition wall and extend between two end faces of the secondary fired body. A partition wall that has a number of pores having an adjusted average pore size can be formed by the first step. Moreover, since the partition wall can be provided with a sufficient gas permeability while maintaining a low porosity, a reduction in pressure loss and an increase in strength can be achieved in combination.

[1-1-1] Primary fired body

The primary fired body includes a porous partition wall that has a number of large pores having an average pore size of 100 to 300 $\mu$m, and a plurality of cells that are defined by the partition wall and extend between two end faces of the primary fired body.

The primary fired body is preferably formed of a material that contains at least one ceramic selected from the group consisting of cordierite, aluminum titanate, silicon carbide, sialon, mullite, silicon nitride, zirconium phosphate, zirconia, titania, alumina, and silica. A primary fired body formed of such a material exhibits sufficient heat resistance, and can be advantageously used even when exposed to high-temperature exhaust gas.

The partition wall has a number of large pores having an average pore size of 100 to 300 $\mu$m. The average pore size of the large pores is preferably 100 to 200 $\mu$m, and more preferably 100 to 150 $\mu$m. If the average pore size of the large pores is less than 100 $\mu$m, the pressure loss may increase. If the average pore size of the large pores is more than 300 $\mu$m (i.e., the ratio of the pore size to the thickness of the partition wall increases), the filling slurry easily passes through the partition wall in the subsequent step so that the pores may not be sufficiently filled with the slurry. As a result, the large pores may remain in the partition wall. The term "average pore size" used herein refers to a value measured using a mercury porosimeter.

The primary fired body may be produced as follows, for example. Specifically, a cordierite-forming raw material is provided as a material for kneaded clay. The cordierite-forming raw material is prepared by mixing a silica source component, a magnesia source component, an alumina source component, and the like in a cordierite crystal theoretical composition. It is preferable to use quartz or fused silica as the silica source component. The particle size of the silica source component is preferably 100 to 150 $\mu$m.

Examples of the magnesia source component include talc, magnesite, and the like. Among these, talc is preferable. The content of talc in the cordierite-forming raw material is preferably 37 to 43 mass%. The particle size of talc is preferably 5 to 50 $\mu$m, and more preferably 10 to 40 $\mu$m. The magnesia (MgO) source component may contain $Fe_2O_3$, CaO, $Na_2O$, $K_2O$, and the like as impurities.

The alumina source component preferably contains at least one of aluminum oxide and aluminum hydroxide due to a low impurity content. The content of aluminum hydroxide in the cordierite-forming raw material is preferably 10 to 30 mass%, and the content of aluminum oxide in the cordierite-forming raw material is preferably 0 to 20 mass%.

A material for kneaded clay (additive) added to the cordierite-forming raw material is also provided. At least a binder and a pore-forming material are used as additives. A dispersant and a surfactant may be used in addition to the binder and the pore-forming material. A low-melting-point reactant is used as the pore-forming material. The low-melting-point reactant may be at least one metal selected from the group consisting of iron, copper, zinc, lead, aluminum, and nickel, an alloy that contains the above metal as the main component (e.g., carbon steel, cast iron, or stainless steel when using iron), or an alloy that contains two or more of the above metals as the main component. The low-melting-point reactant is preferably a powdery or fibrous iron alloy. The particle size or the fiber diameter of the iron alloy is preferably 10 to 200 $\mu$m. The low-melting-point reactant may have a spherical shape, a diamond shape, or the like. The shape of the pores can be easily controlled if the low-melting-point reactant has such a shape.

Examples of the binder include hydroxypropyl methyl cellulose, methyl cellulose, hydroxyethyl cellulose, carboxymethyl cellulose, polyvinyl alcohol, and the like. Examples of the dispersant include dextrin, a polyalcohol, and the like. Examples of the surfactant include a fatty acid soap and the like. These additives may be used either individually or in combination.

100 parts by mass of the cordierite-forming raw material, 3 to 8 parts by mass of the binder, 3 to 40 parts by mass of the pore-forming material, 0.1 to 2 parts by mass of the dispersant, and 10 to 40 parts by mass of water are mixed and kneaded to obtain a kneaded clay.

The kneaded clay is formed into a honeycomb shape by an extrusion forming method, an injection forming method, a press forming method, or the like to obtain a honeycomb formed body. It is preferable to use the extrusion forming method since the kneaded clay can be continuously formed, and cordierite crystals can be oriented. The extrusion forming method may be implemented using a vacuum kneader, a ram extruder, a twin-screw continuous extruder, or the like.

The honeycomb formed body is then dried and fired (primary firing) to obtain a primary fired body. The honeycomb formed body may be dried by hot-air drying, microwave drying, dielectric drying, drying under reduced pressure, vacuum drying, freeze drying, or the like. It is preferable to dry the honeycomb formed body by hot-air drying and microwave drying or dielectric drying since the entire honeycomb formed body can be dried quickly and uniformly. The dried honeycomb formed body is fired to obtain a primary fired body provided with a partition wall having pores with an average pore size of 100 to 300 $\mu$m. The honeycomb formed body formed using the cordierite-forming raw material is normally fired at 1410 to 1440°C for 3 to 15 hours in the air.

[1-1-2] Filling slurry

The filling slurry contains filling particles having an average particle size of 5 to 50 $\mu$m. The average particle size of the filling particles may be appropriately selected depending on the application of the honeycomb structure, but is preferably 5 to 30 $\mu$m, and more preferably 5 to 20 $\mu$m. If the average particle size of the filling particles is less than 5 $\mu$m, since the average pore size of the entire partition wall decreases to a large extent, the gas permeability of the partition wall may decrease so that the pressure loss may increase. If the average particle size of the filling particles is more than 50 $\mu$m, since the average pore size of the entire partition wall increases to a large extent, the PM collection efficiency may decrease.

The filling particles may be formed of the same material (excluding the pore-forming material) as the material for the primary fired body. Specific examples of the material for the filling particles include cordierite, SiC, aluminum titanate, mullite, alumina, zeolite, and the like. When the filling particles are formed of the same material as the material for the primary fired body (i.e., a difference in thermal expansion coefficient does not occur), a thermal stress occurs to only a small extent (i.e., the honeycomb structure rarely breaks) when the honeycomb structure is used at a high temperature. Note that the filling particles may be formed of a material differing from the material for the primary fired body. For example, the filling particles may be formed of a material in which a noble metal is dispersed and supported in pores formed in a carrier material for noble metal catalyst (e.g., $\gamma$-alumina, ceria, or zirconia). In this case, the filling particles exhibit a catalytic function. When using transition metal-substituted zeolite as the carrier material for noble metal catalyst, the filling particles exhibit a function of a NOx selective reduction catalyst.

The pores may be filled with the filling slurry by a suction method, a pressurization method, or the like.

The primary fired body filled with the filling slurry may be fired (secondary firing) by a known method. For example, the primary fired body may be fired in the same manner as the honeycomb formed body. The secondary firing temperature may be the same as the primary firing temperature when the material of the filling particles is the same as the material of the primary fired body, or may be lower than the primary firing temperature in order to maintain a large pore size. When the material of the filling particles differs from the material of the primary fired body, the secondary firing temperature may be appropriately adjusted depending on the material. For example, when using $\gamma$-alumina particles to provide a catalytic function, the secondary firing temperature may be about 650°C (normal firing temperature).

[1-1-3] Secondary fired body

The secondary fired body includes a porous partition wall that has a number of pores having an average pore size smaller than that of the large pores, and a plurality of cells that are defined by the partition wall and extend between two end faces of the secondary fired body.

The average pore size of the small pores may be appropriately selected depending on the application of the honeycomb structure, but is preferably 5 to 30 $\mu$m, and more preferably 8 to 15 $\mu$m, for example. If the average pore size is less than 8 $\mu$m, the pressure loss may increase to a large extent due to an increase in flow resistance of the partition wall. If the average pore size is more than 30 $\mu$m, the PM collection efficiency may decrease.

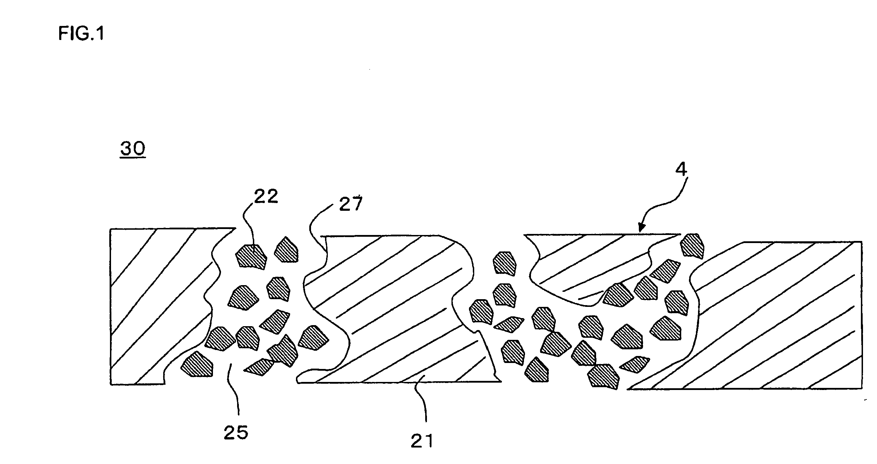

FIG. 1 is an enlarged cross-sectional view showing the surface area of a partition wall 4 of a secondary fired body 30. FIG. 1 shows an example in which large pores 27 formed in a partition wall 21 are filled with filling particles 22 so that a number of pores 25 having an average pore size smaller than that of the large pores 27 are formed.

[1-2] Second step

The second step includes plugging the cells of the secondary fired body on either end face or inside the cells to form plugging sections to obtain a honeycomb structure that includes the partition wall and the plugging sections, the partition wall having a thickness of 76.2 to 177.8 $\mu$m, an average pore size of 8 to 30 $\mu$m, and a porosity of 10 to 35%. A wall-flow filter that exhibits a low pressure loss and a high particulate matter collection efficiency can be formed by the second step.

[1-2-1] Plugging section

The plugging sections are formed by plugging the cells of the secondary fired body on either end face or inside the cells. A honeycomb structure that shows a low pressure loss and exhibits a high exhaust gas particulate matter (PM) collection efficiency can be obtained by utilizing such plugging sections.

The material for the plugging sections (i.e., plugging slurry) may be the same as or different from the material for kneaded clay used for the primary fired body. Specifically, the material for the plugging section (i.e., plugging slurry) may be obtained by mixing a ceramic raw material, a surfactant, and water optionally together with a sintering aid, a pore-forming agent, and the like to prepare a slurry, and kneading the slurry using a mixer or the like.

The plugging sections are formed as follows. Specifically, the cells that are not to be plugged are masked on one end face of the secondary fired body, and the one end face of the secondary fired body is immersed in the plugging slurry in a container to fill the unmasked cells with the plugging slurry. The secondary fired body is then dried and fired to obtain a secondary fired body (i.e., honeycomb structure) provided with the plugging sections. The drying/firing conditions may be the same as the drying/firing conditions for the honeycomb formed body.

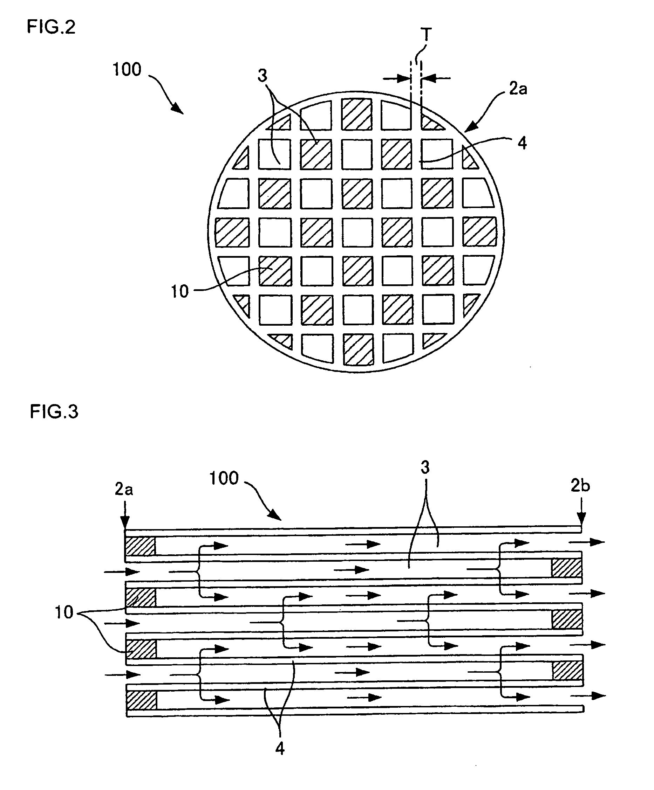

The arrangement of the plugging sections is not particularly limited insofar as the plugging sections are disposed to plug the cells on either of the end faces or inside the cells. For example, it is preferable that the plugging sections be disposed in a checkered pattern (see plugging sections 10 of a honeycomb structure 100 shown in FIGS. 2 and 3).

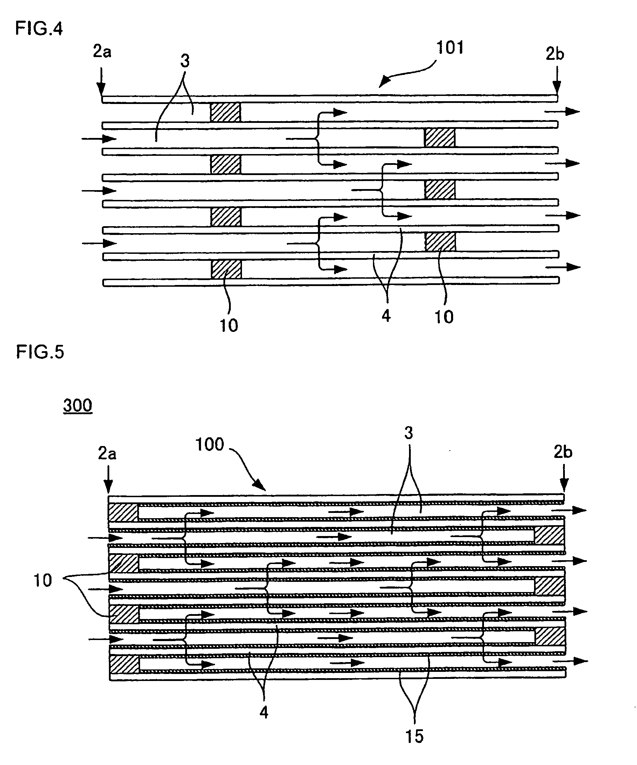

FIG. 4 is a cross-sectional view (corresponding to FIG 3) schematically showing a honeycomb structure obtained by a method of producing a honeycomb structure according to another embodiment of the present invention. In a honeycomb structure 101 shown in FIG 5, the plugging sections 10 are disposed to plug cells 3 inside the cells 3. According to this configuration, since exhaust gas passes through the partition wall at least twice, the PM collection efficiency increases.

[1-2-2] Honeycomb structure

As shown in FIG. 3, the honeycomb catalyst body 100 obtained by the second step includes a porous partition wall 4 that has a number of pores 25 (see FIG 1) and is disposed to form a plurality of cells 3 that extend between two end faces 2a and 2b of the honeycomb structure, and plugging sections 10 that are disposed to plug the cells 3 on either of the end faces 2a and 2b. The honeycomb structure 100 shown in FIGS. 2 and 3 is a wall-flow filter that exhibits a low pressure loss and a high particulate matter collection efficiency.

The partition wall of the honeycomb structure has a thickness of 76.2 to 177.8$\mu$ m, an average pore size of 8 to 30 $\mu$m, and a porosity of 10 to 35%.

The thickness of the partition wall is 76.2 $\mu$m (3 mil) to 177.8 $\mu$m (7 mil), and preferably 76.2 $\mu$m (3 mil) to 127.0 $\mu$m (5 mil). If the thickness of the partition wall is less than 76.2 $\mu$m, a decrease in strength of the partition wall and a decrease in exhaust gas particulate matter collection efficiency may occur. If the thickness of the partition wall is more than 177.8 $\mu$m, the pressure loss may increase. Note that one mil equals one thousandth of an inch (about 0.025 mm). Note that the thickness of the partition wall used herein refers to a value measured using a scanning electron microscope (SEM). In FIG 2, the thickness of the partition wall is indicated by "T".

The average pore size of the partition wall is 8 to 30 $\mu$m, and preferably 10 to 15 $\mu$m. If the average pore size of the partition wall is less than 8 $\mu$m, the pressure loss may increase. If the average pore size of the partition wall is more than 30 $\mu$m, the PM collection efficiency may decrease.

The porosity of the partition wall is 10 to 35%, and preferably 20 to 30%. If the porosity of the partition wall is less than 10%, the pressure loss may increase. If the porosity of the partition wall is more than 35%, the strength of the partition wall may decrease. The term "porosity" used herein refers to a value measured using a mercury porosimeter.

The cell density is preferably 12.4 cells/cm$^2$ (80 cpsi) to 45.0 cells/cm$^2$ (290 cpsi), and more preferably 15.5 cells/cm$^2$ (100 cpsi) to 38.8 cells/cm$^2$ (250 cpsi). If the cell density is less than 12.4 cells/cm$^2$, a decrease in strength of the partition wall, an increase in filtration flow rate, and a decrease in PM collection efficiency may occur. If the cell density is more than 45.0 cells/cm$^2$, the pressure loss may increase. Note that the unit "cpsi" is an abbreviation for "cells per square inch"

In the honeycomb structure according to the present invention, the ratio of the total open area of the cells to the sum of the cross-sectional area of the partition wall and the total open area of the cells in the cross section perpendicular the cell extension direction (hereinafter may be referred to as "cell open frontal area") is preferably 83 to 90%, and more preferably 86 to 88%. If the cell open frontal area is less than 83%, the pressure loss may increase. If the cell open frontal area is more than 90%, a decrease in strength of the partition wall, an increase in filtration flow rate, and a decrease in PM collection efficiency may occur.

The permeability of the partition wall is preferably $1.0 \times 10^{-12}$ to $6.0 \times 10^{-12}$ m$^2$, and more preferably $1.5 \times 10^{-12}$ to $4.0 \times 10^{-12}$ m$^2$. If the permeability of the partition wall is less than $1.0 \times 10^{-12}$ m$^2$, the pressure loss may increase. If the permeability of the partition wall is more than $6.0 \times 10^{-12}$ m$^2$, the PM collection efficiency may decrease.

In the honeycomb structure according to the present invention, the hydraulic diameter (m) of the cells and the permeability (m$^2$) of the partition wall preferably satisfy the relationship "(hydraulic diameter of cells)$^2$ / (permeability) = $1.0 \times 10^5$ to $4.5 \times 10^6$", and more preferably satisfy the relationship "(hydraulic diameter of cells)$^2$ / (permeability) = $1.5 \times 10^5$ to $2.5 \times 10^6$". If the value "(hydraulic diameter of cells)$^2$ / (permeability)" is less than $1.0 \times 10^5$, the cells may be clogged. If the value "(hydraulic diameter of cells)$^2$ / (permeability)" is more than $4.5 \times 10^6$, the pores formed in the partition wall may be clogged.

The term "hydraulic diameter of cells" used herein refers to a value calculated by "4 $\times$ (cross-sectional area) / (circumferential length)". The term "cross-sectional area" used in the above expression refers to the cell open area in a cross section perpendicular to the cell extension direction, and the term "circumferential length" used in the above expression refers to the length of the closed line that forms the cell in a cross section perpendicular to the cell extension direction.

The term "permeability" used herein refers to a value calculated by the following expression (1). The permeability is an index that indicates the flow resistance when a given gas passes through a specimen (partition wall). In the expression (1), C indicates the permeability (m$^2$), F indicates the gas flow rate (cm$^3$/s), T indicates the thickness (cm) of the specimen, V indicates the gas viscosity (dynes·sec/cm$^2$), D indicates the diameter (cm) of the specimen, and P indicates the gas pressure (PSI). In the expression (1), 13.839 PSI equals 1 atm, and 68947.6 dynes·sec/cm$^2$ equals 1 PSI.

$$C = \frac{8\,F\,T\,V}{\pi D^2 (P^2 - 13.839^2) / 13.839 \times 68947.6} \times 10^{-4} \qquad (1)$$

The honeycomb structure according to the present invention preferably has a thermal expansion coefficient measured at 40 to 800°C in the cell extension direction of $1.0 \times 10^{-6}$/°C or less. When using the honeycomb structure as a catalyst body (i.e., a catalyst is supported on the honeycomb structure), the honeycomb structure more preferably has a thermal expansion coefficient of $0.8 \times 10^{-6}$/°C or less measured at 40 to 800°C in the cell extension direction, and particularly preferably $0.5 \times 10^{-6}$/°C or less. If the thermal expansion coefficient is more than $1.0 \times 10^{-6}$/°C, a thermal stress may occur to a large extent during use at a high temperature so that breakage may occur. The term "thermal expansion coefficient" used herein refers to a value measured by push-rod dilatometry.

The honeycomb structure is preferably formed of a material that contains at least one ceramic selected from the group consisting of cordierite, aluminum titanate, silicon carbide, sialon, mullite, silicon nitride, zirconium phosphate, zirconia, titania, alumina, and silica. A honeycomb structure formed of such a material exhibits sufficient heat resistance to withstand an environment in which the honeycomb structure is exposed to high-temperature exhaust gas.

It is preferable that the cross-sectional shape of the honeycomb structure along the direction perpendicular to the cell extension direction correspond to the inner shape of an exhaust system in which the honeycomb catalyst body is installed. Specific examples of the cross-sectional shape of the honeycomb structure include a circle, an ellipse, an oval, a trapezoid, a triangle, a quadrangle, a hexagon, an asymmetric shape, and the like. Among these, a circle, an ellipse, or an oval is preferable.

Examples of the cross-sectional shape of the cell along the direction perpendicular to the cell extension direction include a circle, an ellipse, an oval, a trapezoid, a triangle, a quadrangle, a hexagon, an octagon, an asymmetric shape, and the like. Among these, a circle, a hexagon, or an octagon is preferable. It is preferable that the cells that are plugged on the inlet side (i.e., the cells that are open on the outlet side) be smaller in size (open area) than the cells that are plugged on the outlet side (i.e., the cells that are open on the inlet side). When the open area of the cells that are open on the inlet side is larger than that of the cells that are open on the outlet side, a sufficient space remains in the cells even if PM or ash contained in combustion gas is deposited in the cells that are open on the inlet side during use. This makes it possible to suppress an increase in pressure loss due to deposition of ash.

The honeycomb structure obtained by the method according to the present invention may be used as a purification apparatus that removes particulate matter (PM) contained in exhaust gas discharged from a direct-injection gasoline engine, although the application of the honeycomb structure is not limited thereto. Specifically, since the amount of particulate matter contained in exhaust gas discharged from a direct-injection gasoline engine is small as compared with a diesel engine, the thickness of the partition wall need not be increased as compared with the case of using the honeycomb catalyst body for a diesel engine. Therefore, a high PM collection efficiency can be achieved without causing an increase in pressure loss by utilizing the honeycomb structure obtained by the method according to the present invention. Since the honeycomb catalyst body has small heat capacity, the catalyst can be easily and continuously regenerated. Therefore, the honeycomb structure is suitable as a PM collection apparatus (purification apparatus) for a gasoline engine for which an increase in pressure loss (power loss) is particularly undesirable.

[2] Method of producing honeycomb catalyst body

A method of producing a honeycomb catalyst body according to one embodiment of the present invention includes a third step that includes applying a catalyst slurry that contains an organic pore-forming material and a catalyst to the surface of a partition wall of a honeycomb structure produced by the method according to the above embodiment, and heating the honeycomb structure to obtain a honeycomb catalyst body that includes the honeycomb structure and a catalyst layer that contains the catalyst and is supported on the surface of the partition wall of the honeycomb structure. A honeycomb catalyst body that allows the partition wall to have a sufficient strength and a reduced thickness, shows a low pressure loss, and exhibits a high particulate matter collection efficiency and a high exhaust gas purification efficiency, can be produced by the above step. The catalyst layer is a porous layer that has a number of pores.

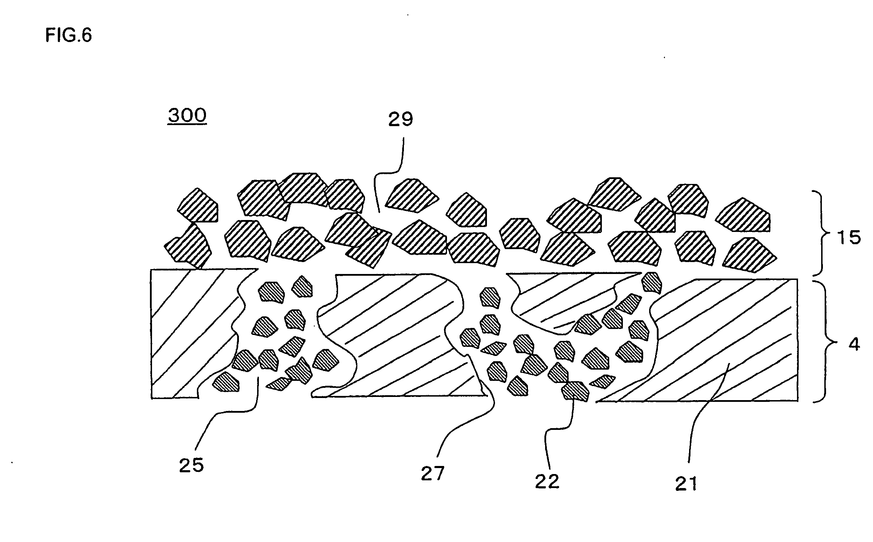

FIG. 5 is a cross-sectional view schematically showing a honeycomb catalyst body obtained by a method of producing a honeycomb catalyst body according to one embodiment of the present invention. In a honeycomb catalyst body 300 shown in FIG. 5, a catalyst layer 15 that contains a catalyst is supported on the surface of the partition wall 4 of the honeycomb structure 100 shown in FIGS. 2 and 3. FIG 6 is an enlarged schematic view showing part (i.e., the surface) of the partition wall 4 of the honeycomb structure 300 shown in FIG 5. As shown in FIG. 6, a number of catalyst layer pores 29 are formed in the catalyst layer 15. The honeycomb catalyst body 300 shown in FIG. 5 may be used as a wall-flow filter that exhibits a low pressure loss and a high particulate matter collection efficiency.

When using a wall-flow filter as an exhaust gas purification apparatus for a diesel engine or a gasoline engine, since a reduction in size and cost is desired for the purification apparatus, it is desirable that the wall-flow filter itself purify exhaust gas in order to reduce the number of parts. In this case, a catalyst must be supported inside the pores formed in the partition wall so that the wall-flow filter purifies exhaust gas. However, the gas permeability of the partition wall decreases due to the catalyst supported inside the pores so that the pressure loss increases.

According to the honeycomb catalyst body produced by the method according to the present invention, the porosity of the partition wall is reduced to achieve a sufficient strength, and the flow resistance of the partition wall can be reduced by moderately increasing the pore size (average pore size) while maintaining the reduced porosity. Moreover, the catalyst layer formed on the surface of the partition wall has a substantially zero exhaust gas flow resistance (i.e., high permeability). Therefore, the honeycomb catalyst body allows the partition wall to have a sufficient strength and a reduced thickness, shows a low pressure loss, and exhibits a high particulate matter collection efficiency and a high exhaust gas purification efficiency. Moreover, the honeycomb catalyst body can purify carbon monoxide (CO), hydrocarbons (HC), and nitrogen oxides (NOx) contained in exhaust gas.

[2-1] Honeycomb structure

As the honeycomb structure, the honeycomb structure according to the above embodiment may be suitably used.

[2-2] Catalyst slurry

The catalyst slurry contains an organic pore-forming material and a catalyst. A catalyst layer that has a number of pores and contains a catalyst can be formed by utilizing such a catalyst slurry. Exhaust gas that passes through the partition wall also passes through the catalyst layer supported on the surface of the partition wall (i.e., exhaust gas efficiently comes in contact with the catalyst contained in the catalyst layer) so that a high purification efficiency is achieved. Since it suffices that exhaust gas comes in contact with the catalyst inside the catalyst layer, the catalyst layer substantially need not be supported on the inner surface of the pores formed in the partition wall. This makes it unnecessary to cause the catalyst layer to be uniformly supported on the inner surface of the pores formed in the partition wall when producing the honeycomb catalyst body, and prevents a problem in which the pores become narrow due to the catalyst layer supported on the inner surface of the pores formed in the partition wall so that the exhaust gas flow resistance increases.

As the organic pore-forming material, starch, a resin foam, or the like may be suitably used.

The catalyst is preferably an oxidizing catalyst that contains at least one of platinum and palladium, and cerium oxide. Unburnt hydrocarbons, carbon monoxide, and PM can be effectively oxidized by utilizing the oxidizing catalyst. Since cerium oxide has an oxygen occlusion function, the oxidizing function can be maintained even when the exhaust gas has become fuel-rich.

It is also preferable that the catalyst be a three-way catalyst that contains at least one noble metal selected from the group consisting of platinum, rhodium, and palladium, and a promoter that contains at least one of cerium oxide and zirconium oxide. Oxidation of nitrogen oxides, reduction of hydrocarbons and carbon monoxide, and oxidation of PM can be achieved at the same time by utilizing such a three-way catalyst. Since cerium oxide has an oxygen occlusion function, the oxidizing function can be maintained even when the exhaust gas has become fuel-rich, and nitrogen oxides can be efficiently reduced even when the exhaust gas has become lean.

It is also preferable that the catalyst be a NOx occlusion/reduction catalyst that contains at least one of an alkali metal and an alkaline earth metal. When using such a NOx occlusion/reduction catalyst, nitrogen oxides can be reduced even under conditions where a three-way catalyst does not function due to a high air/fuel ratio of exhaust gas.

The catalyst slurry may be applied by a known method. For example, a dipping method, a pressurization method, a suction method, or the like may be used.

The heating conditions are not particularly limited insofar as the organic pore-forming material can be oxidized and removed by heating. For example, the honeycomb structure is heated at 500 to 700°C (preferably 550 to 650°C) for 0.5 to 6 hours (preferably 1 to 3 hours).

It is preferable that the catalyst layer further contain a promoter that contains at least one compound selected from the group consisting of alumina, zirconia, and ceria, and a holding material that holds the catalyst and the promoter. The exhaust gas purification efficiency is improved by adding the promoter and the holding material to the catalyst layer.

The holding material is not particularly limited insofar as the holding material can hold the catalyst and the promoter. Examples of the holding material include alumina, magnesium oxide, silica, cerium oxide, zirconium oxide, titania, and the like. Among these, it is preferable to use γ-alumina that can stably maintain a large specific surface area. These materials may be used either individually or in combination.

The density of the catalyst layer is preferably 80 to 400 g/L, more preferably 100 to 300 g/L, and particularly preferably 150 to 250 g/L. If the density of the catalyst layer is less than 80 g/L, the distance between the noble metal particles dispersed in the catalyst layer decreases so that the catalyst may thermally deteriorate. If the density of the catalyst layer is more than 400 g/L, the pores formed in the partition wall may be clogged so that the pressure loss may increase.

The average pore size of the catalyst layer is preferably 10 $\mu$m or more, and more preferably 40 $\mu$m or more. The porosity of the catalyst layer is preferably 40% or more, and more preferably 50% or more. If the average pore size or the porosity is less than the above value, the flow resistance may increase to a large extent when exhaust gas passes through the catalyst layer so that the pressure loss may increase.

The pore size of the catalyst layer used herein refers to a value measured by image analysis. Specifically, when the thickness of the catalyst layer is referred to as "$t_2$", at least twenty $t_2 \times t_2$ areas of an SEM photograph of the cross section of the catalyst layer are observed. The maximum linear void distance is measured in each area, and half of the average value of the maximum linear distances measured for all of the areas is taken as the average pore size. The porosity of the catalyst layer used herein refers to a value measured by image analysis in the same manner as the pore size of the catalyst layer. Specifically, when the thickness of the catalyst layer is referred to as "$t_2$", at least five $t_2 \times t_2$ areas of an SEM photograph of the cross section of the catalyst layer are observed. The void area ratio is measured in each area, and the average value of the void area ratios measured for all of the areas is taken as the porosity.

The thickness of the catalyst layer is preferably 20 $\mu$m or more, more preferably 50 to 100 $\mu$m, and particularly preferably 60 to 80 $\mu$m. In the honeycomb catalyst body according to the present invention, since exhaust gas mainly comes in contact with the catalyst inside the catalyst layer (i.e., the purification reaction mainly occurs inside the catalyst layer), the catalyst layer must have a thickness required to provide a sufficient contact area. If the thickness of the catalyst layer is less than 20 $\mu$m, a sufficient contact area may not be obtained.

The honeycomb catalyst body obtained by the method according to the present invention may be used as an exhaust gas purification apparatus that removes particulate matter contained in exhaust gas discharged from an internal combustion engine (e.g., diesel engine or gasoline engine), a boiler, or the like, and may be suitably used as a purification apparatus that removes particulate matter contained in exhaust gas discharged from a direct-injection gasoline engine. Specifically, since the amount of particulate matter contained in exhaust gas discharged from a direct-injection gasoline engine is small as compared with a diesel engine, the thickness of the partition wall need not be increased as compared with the case of using the honeycomb catalyst body for a diesel engine. Therefore, a high PM collection efficiency can be achieved without causing an increase in pressure loss by utilizing the honeycomb catalyst body obtained by the method according to the present invention. Since the honeycomb catalyst body has small heat capacity, the catalyst can be easily and continuously regenerated. Therefore, the honeycomb structure is suitable as a PM collection apparatus (purification apparatus) for a gasoline engine for which an increase in pressure loss (power loss) is particularly undesirable.

EXAMPLES

The present invention is further described below by way of examples. Note that the present invention is not limited to the following examples.

Hydraulic diameter (m) of cells

The cell open area (cross-sectional area) in a cross section perpendicular to the cell extension direction, and the length (circumferential length) of the closed line forming the cell in a cross section perpendicular to the cell extension direction were measured for a plurality of (20) cells. The average value of the values calculated by "4 $\times$ (cross-sectional area) / (circumferential length)" was taken as the hydraulic diameter (m) of the cells.

Permeability ($m^2$)

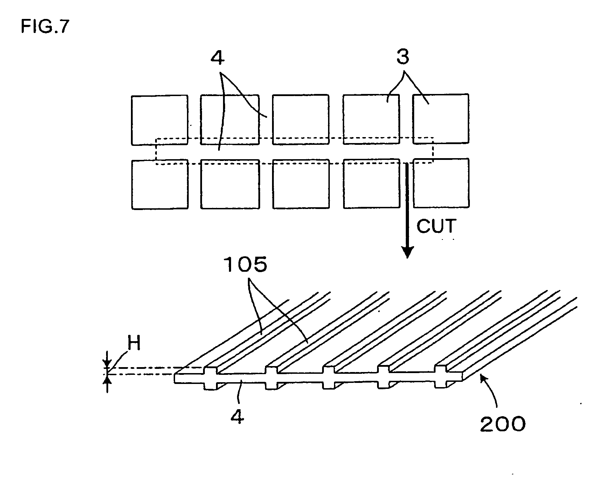

The permeability was calculated as follows. As shown in FIG 7, a honeycomb catalyst body 300 was cut into a specimen 200 so that the part (rib 105) of the partition wall 4 remained to have a rib height H of 0.2 mm. The specimen 200 may have a rectangular shape or a disc-like shape. Air at room temperature was passed through the specimen 200, and the permeability was calculated by the following expression (1).

FIG. 7 is a schematic view illustrative of the specimen used to measure the permeability.

$$C = \frac{8\,F\,T\,V}{\pi D^2 (P^2 - 13.839^2)/13.839 \times 68947.6} \times 10^{-4} \qquad (1)$$

It is desirable to use a fluid seal (e.g., grease) so that air does not leak through the opening between the specimen 200 and a seal formed by the rib 105. The permeability was measured at an air flow rate that was adjusted so that the calculated flow rate through the partition wall was 0.1 to 1 cm/sec.

In the expression (1), C indicates the permeability ($m^2$), F indicates the gas flow rate ($cm^3$/s), T indicates the thickness (cm) of the specimen, V indicates the gas viscosity (dynes·sec/$cm^2$), D indicates the diameter (cm) of the specimen, and P indicates the gas pressure (PSI). In the expression (1), 13.839 PSI equals 1 atm, and 68947.6 dynes·sec/$cm^2$ equals 1 PSI.

The permeability was measured using a "Capillary Flow Porometer 1100AEX" (manufactured by Porous Materials, Inc.). The permeability ($m^2$) of the honeycomb structure was measured in the same manner as described above.

Thickness ($\mu$m) of partition wall

One end face of the honeycomb catalyst body was observed using a scanning electron microscope (SEM). The thickness was measured for an arbitrarily selected ten areas of the partition wall, and the average thickness was taken as the thickness of the partition wall.

Average pore size ($\mu$m)

The pore size (pore size calculated from the pressure when the cumulative mercury volume injected into a porous substrate reached 50% of the total pore volume of the porous substrate) was measured using a mercury porosimeter (mercury intrusion method). As the mercury porosimeter, an "Auto Pore III 9405" (manufactured by Micrometrics) was used.

Porosity (%)

The porosity was measured using a mercury porosimeter (mercury porosimetry) in the same manner as the average pore size.

Cell density

One end face of the honeycomb catalyst body was observed using a scanning electron microscope (SEM). The number of cells present in an arbitrarily selected area was measured to calculate the cell density.

Cell open frontal area

The ratio of the total open area of the cells to the sum of the cross-sectional area of the partition wall and the total open area of the cells in the cross section perpendicular to the cell extension direction was calculated, and taken as the cell open frontal area.

Thermal expansion coefficient

The thermal expansion coefficient was measured by push-rod dilatometry.

Pressure loss

Air was circulated through the honeycomb catalyst body at room temperature at a flow rate of 0.5 $m^3$/min to measure the pressure loss. The pressure loss (reference pressure loss) of a comparison honeycomb catalyst body having an identical shape, an identical cell density, and an identical partition wall thickness was measured, and the ratio (pressure drop increase rate (%)) with respect to the reference pressure loss was calculated. A case where the pressure drop increase rate was 20% or more was evaluated as "Bad", and a case where the pressure drop increase rate was less than 20% was evaluated as "Good".

PM collection efficiency

Exhaust gas discharged from a diesel burner was introduced into the honeycomb catalyst body at a particulate matter (PM) concentration of 1 mg/m$^3$, a temperature of 200°C, and a flow rate of 2.4 Nm$^3$/min, and the number of PM (PM particle count) was measured on the upstream side (before the exhaust gas was introduced into the honeycomb catalyst body) and the downstream side (after the exhaust gas was discharged from the honeycomb catalyst body). The PM collection efficiency was calculated by "((upstream-side PM particle count) - (downstream-side PM particle count)) / (upstream-side PM particle count) $\times$ 100". The PM particle count was measured using a "Scanning Mobility Particle Sizer (SMPS)" (manufactured by TSI). A case where the PM collection efficiency was 80% or more was evaluated as "Good", and a case where the PM collection efficiency was less than 80% was evaluated as "Bad".

Hydrostatic strength

A hydrostatic pressure was applied to the outer circumferential surface of the honeycomb structure covered with rubber, and the pressure when the honeycomb structure broke was measured. A case where the honeycomb structure broke at a pressure of less than 2.0 MPa was evaluated as "Bad", and a case where the honeycomb structure broke at a pressure of 2.0 MPa or more was evaluated as "Good".

Clogging of partition wall due to soot

The honeycomb structure was installed in the exhaust system of an automobile equipped with a direct injection gasoline engine (displacement: 2.0 L) at a position under the floor. The automobile was operated on a chassis dynamo five times in the European NEDC mode. A case where the pressure loss increase rate was less than 1.1 % was evaluated as "Good", and a case where the pressure loss increase rate was 1.1% or more was evaluated as "Bad".

Exhaust gas purification performance

The honeycomb structure (honeycomb catalyst body) was installed in the exhaust system of an automobile equipped with a direct injection gasoline engine (displacement: 2.0 L) at a position under the floor. The automobile was operated on a chassis dynamo in the European NEDC mode to measure the emissions of carbon monoxide, unburnt hydrocarbons, and nitrogen oxides. The emissions of carbon monoxide, unburnt hydrocarbons, and nitrogen oxides were also measured using a flow-through honeycomb catalyst body (partition wall thickness: 100 $\mu$m, cell density: 93 cells/cm$^2$) supporting an identical amount of an identical catalyst. The measured emission values were then compared. A case where the emissions were larger than those of the comparison honeycomb catalyst body was evaluated as "Bad", and a case where the emissions were smaller than those of the comparison honeycomb catalyst body was evaluated as "Good".

Example 1

A raw material was prepared as shown in Table 1 (average particle size and mixing ratio). Specifically, 40 mass% of talc (average particle size: 35 $\mu$m), 19 mass% of talc (average particle size: 35 $\mu$m), 12 mass% of quartz (average particle size: 116 $\mu$m), 14 mass% of aluminum oxide (average particle size: 6 $\mu$m), 15 mass% of aluminum hydroxide (average particle size: 3 $\mu$m), and 20 mass% of iron powder (pore-forming material) (average particle size: 30 $\mu$m) were mixed to prepare a material for kneaded clay.

100 parts by mass of the material for kneaded clay, 8 parts by mass of hydroxypropyl methyl cellulose (binder), 0.1 parts by mass of potassium laurate soap (dispersant), and 35 parts by mass of water were mixed and kneaded to obtain a kneaded clay having plasticity. The clay was formed into a cylindrical shape using a vacuum deairing machine, and formed into a honeycomb shape having a given partition wall thickness and a given cell density using an extruder to obtain a honeycomb formed body. The honeycomb formed body was dielectric-dried, hot-air-dried, and fired at 1420°C for 10 hours to obtain an intermediate honeycomb structure (primary fired body) provided with a partition wall having pores with an average pore size of 100 to 300 $\mu$m.

A slurry containing particles formed of a material shown in Table 1 and having an average particle size shown in Table 1 was prepared. The pores formed in the partition wall were filled with the slurry. The intermediate honeycomb structure was then dried and fired under the same conditions as those employed when producing the honeycomb formed body to obtain a honeycomb structure (i.e., honeycomb structure body (secondary fired body)) in which the cells were not plugged.

The end faces of the honeycomb structure body were plugged alternately (in a checkered pattern) using the same material (plugging slurry) as the material for kneaded clay, and the honeycomb structure body was fired at 1420°C

EP 2 239 037 B1

for four hours to obtain a honeycomb structure. The honeycomb structure had a diameter of 105 mm, a length of 114 mm, and a plugging depth of 5 mm. The honeycomb structure was subjected to the above measurements and evaluations.

The honeycomb structure of Example 1 had a partition wall thickness of 81.3 $\mu$m (3.2 mil), a cell density of 43.4 cells/cm$^2$ (280 cpsi), a cell hydraulic diameter of 0.00144 m, a cell open frontal area of 89.6%, an average pore size of 35 $\mu$m, a porosity of 12%, a permeability of $5.03 \times 10^{-12}$, and a value "(hydraulic diameter of cells)$^2$ / (permeability)" of $4.11 \times 10^5$. The pressure loss evaluation result was "Good", the PM collection efficiency evaluation result was "Good", the partition wall strength evaluation result was "Good", the partition wall clogging evaluation result was "Good", and the exhaust gas purification performance evaluation result was also "Good".

Examples 2 to 17 and Comparative Examples 1 to 8

Honeycomb structures of Examples 2 to 17 and Comparative Examples 1 to 8 were obtained in the same manner as in Example 1, except that the conditions were changed as shown in Table 1. The measurement and evaluation results for the resulting honeycomb structure are shown in Tables 2 and 3.

13

TABLE 1

| | Main raw material | | | | | | Pore-forming material | | Filling slurry raw material (average particle size) |
| | Talc | Kaolin | Quartz | Fused silica | Aluminum oxide | Aluminum hydroxide | Iron powder | Graphite | |
| | mass% (average particle size) | mass% (average particle size) | mass% (average particle size) | mass% (average particle size) | mass% (average particle size) | mass% (average particle size) | mass% (average particle size) | mass% (average particle size) | |
|---|---|---|---|---|---|---|---|---|---|
| Example 1 | 40 (35 μm) | 19 (35 μm) | 12 (116 μm) | - | 14 (6 μm) | 15 (3 μm) | 20 (30 μm) | 0 | Cordierite ground particles (60 μm) |
| Example 2 | 40 (35 μm) | 19 (35 μm) | 12 (116 μm) | - | 14 (6 μm) | 15 (3 μm) | 20 (35 μm) | 0 | Cordierite ground particles (55 μm) |
| Example 3 | 40 (35 μm) | 19 (35 μm) | 12 (116 μm) | - | 14 (6 μm) | 15 (3 μm) | 20 (40 μm) | 0 | Cordierite ground particles(35 μm) |
| Example 4 | 40 (35 μm) | 19 (35 μm) | 12 (116 μm) | - | 14 (6 μm) | 15 (3 μm) | 20 (42 μm) | 0 | Cordierite ground particles (35 μm) |
| Example 5 | 40 (35 μm) | 19 (35 μm) | 12 (116 μm) | - | 14 (6 μm) | 15 (3 μm) | 20 (35 μm) | 0 | Cordierite ground particles (38 μm) |
| Example 6 | 40 (35 μm) | 19 (35 μm) | 12 (116 μm) | - | 14 (6 μm) | 15 (3 μm) | 20 (25 μm) | 0 | Cordierite ground particles (35 μm) |

(continued)

| | Main raw material | | | | | | Pore-forming | material | Filling slurry raw material (average particle size) |
| | Talc | Kaolin | Quartz | Fused silica | Aluminum oxide | Aluminum hydroxide | Iron powder | Graphite | |
| | mass% (average particle size) | mass% (average particle size) | mass% (average particle size) | mass% (average particle size) | mass% (average particle size) | mass% (average particle size) | mass% (average particle size) | mass% (average particle size) | |
|---|---|---|---|---|---|---|---|---|---|
| Example 7 | 40 (35 μm) | 19 (35 μm) | 12 (116 μm) | - | 14 (6 μm) | 15 (3 μm) | 20 (30 μm) | 0 | γ-Alumina ground particles (35 μm) |
| Example 8 | 40 (35 μm) | 19 (35 μm) | 12 (116 μm) | - | 14 (6 μm) | 15 (3 μm) | 20 (30 μm) | 0 | Cordierite ground particles (40 μm) |
| Example 9 | 40 (35 μm) | 19 (35 μm) | 12 (116 μm) | - | 14 (6 μm) | 15 (3 μm) | 20 (40 μm) | 0 | Cordierite ground particles (33 μm) |
| Example 10 | 40 (35 μm) | 19 (35 μm) | 12 (116 μm) | - | 14 (6 μm) | 15 (3 μm) | 20 (35 μm) | 0 | Cordierite ground particles (28 μm) |
| Example 11 | 40 (35 μm) | 19 (35 μm) | 12 (116 μm) | - | 14 (6 μm) | 15 (3 μm) | 20 (30 μm) | 0 | Cordierite ground particles (54 μm) |
| Example 12 | 40 (35 μm) | 19 (35 μm) | 12 (116 μm) | - | 14 (6 μm) | 15 (3 μm) | 20 (30 μm) | 0 | Cordierite ground particles (53 μm) |
| Example 13 | 40 (35 μm) | 19 (35 μm) | 12 (116 μm) | - | 14 (6 μm) | 15 (3 μm) | 20 (35 μm) | 0 | Cordierite ground particles (60 μm) |

| | Main raw material | | | | | | Pore-forming | material | Filling slurry raw material (average particle size) |
|---|---|---|---|---|---|---|---|---|---|
| | Talc | Kaolin | Quartz | Fused silica | Aluminum oxide | Aluminum hydroxide | Iron powder | Graphite | |
| | mass% (average particle size) | mass% (average particle size) | mass% (average particle size) | mass% (average particle size) | mass% (average particle size) | mass% (average particle size) | mass% (average particle size) | mass% (average particle size) | |
| Example 14 | 40 (35 μm) | 19 (35 μm) | 12 (116 μm) | - | 14 (6 μm) | 15 (3 μm) | 20 (35 μm) | 0 | Cordierite ground particles (60 μm) |
| Example 15 | 40 (35 μm) | 19 (35 μm) | 12 (116 μm) | - | 14 (6 μm) | 15 (3 μm) | 20 (35 μm) | 0 | Cordierite ground particles (55 μm) |
| Example 16 | 40 (35 μm) | 19 (35 μm) | 12 (116 μm) | - | 14 (6 μm) | 15 (3 μm) | 20 (35 μm) | 0 | Cordierite ground particles (30 μm) |
| Example 17 | 40 (35 μm) | 19 (35 μm) | 12 (116 μm) | - | 14 (6 μm) | 15 (3 μm) | 20 (35 μm) | 0 | γ-Alumina ground particles (30 μm) |
| Comparative Example 1 | 39.7 (8 μm) | 51.2 (35 μm) | 0 | 0 | 18.2 (6 μm) | 0 | 0 | 0 | - |
| Comparative Example 2 | 39.7 (50 μm) | 51.2 (35 μm) | 0 | 0 | 18.2 (6 μm) | 0 | 0 | 10 (50 μm) | - |
| Comparative Example3 | 40 (35 μm) | 19 (35 μm) | 12 (116 μm) | - | 14 (6 μm) | 15 (3 μm) | 0 | 0 | - |
| Comparative Example 4 | 39.7 (50 μm) | 51.2 (35 Am) | 0 | 0 | 18.2 (6 μm) | 0 | 0 | 10 (50 μm) | - |
| Comparative Example 5 | 40 (20 μm) | 19 (35 μm) | 12 (116 μm) | - | 14 (6 μm) | 15 (3 μm) | 0 | 0 | - |

(continued)

| | Main raw material | | | | | | Pore-forming | material | Filling slurry raw material (average particle size) |
|---|---|---|---|---|---|---|---|---|---|
| | Talc | Kaolin | Quartz | Fused silica | Aluminum oxide | Aluminum hydroxide | Iron powder | Graphite | |
| | mass% (average particle size) | mass% (average particle size) | mass% (average particle size) | mass% (average particle size) | mass% (average particle size) | mass% (average particle size) | mass% (average particle size) | mass% (average particle size) | |
| Comparative Example 6 | 39.4 (8 $\mu$m) | 21.5 (30 $\mu$m) | 0 | 10 (30 $\mu$m) | 29.1 (6 $\mu$m) | 0 | 0 | 0 | - |
| Comparative Example 7 | 39.4 (8 $\mu$m) | 21.5 (35 $\mu$m) | 0 | 10 (30 $\mu$m) | 29.1 (6 $\mu$m) | 0 | 0 | 0 | - |
| Comparative Example 8 | 39.4 (8 $\mu$m) | 21.5 (35 $\mu$m) | 0 | 10 (30 $\mu$m) | 29.1 (6 $\mu$m) | 0 | 0 | 0 | - |

TABLE 2

| | Rib thickness | | Cell density | | Cell hydraulic diameter (d) (m) | Open frontal area (OFA) (%) | Pore size ($\mu$m) | Porosity (%) | Partition wall permeability (m$^2$) | d$^2$/P |
|---|---|---|---|---|---|---|---|---|---|---|
| | (mil) | ($\mu$m) | (cpsi) | (/cm$^2$) | | | | | | |
| Example 1 | 3.2 | 8.128 | 280 | 43.4 | 0.00144 | 89.6 | 35 | 12 | $5.03 \times 10^{-12}$ | $4.11 \times 10^5$ |
| Example 2 | 3.5 | 8.890 | 250 | 38.8 | 0.00152 | 89.2 | 29 | 17 | $4.89 \times 10^{-12}$ | $4.71 \times 10^5$ |
| Example 3 | 4.5 | 11.430 | 180 | 27.9 | 0.00178 | 88.3 | 18 | 20 | $2.22 \times 10^{-12}$ | $1.43 \times 10^6$ |
| Example 4 | 4.5 | 11.430 | 200 | 31.0 | 0.00168 | 87.7 | 18 | 22 | $2.44 \times 10^{-12}$ | $1.16 \times 10^6$ |
| Example 5 | 4.5 | 11.430 | 200 | 31.0 | 0.00168 | 87.7 | 20 | 18 | $2.46 \times 10^{-12}$ | $1.15 \times 10^6$ |
| Example 6 | 4.5 | 11.430 | 200 | 31.0 | 0.00168 | 87.7 | 18 | 11 | $1.22 \times 10^{-12}$ | $2.32 \times 10^6$ |
| Example 7 | 4.5 | 11.430 | 200 | 31.0 | 0.00168 | 87.7 | 18 | 13 | $1.44 \times 10^{-12}$ | $1.96 \times 10^6$ |
| Example 8 | 4.5 | 11.430 | 200 | 31.0 | 0.00168 | 87.7 | 22 | 13 | $2.15 \times 10^{-12}$ | $1.32 \times 10^6$ |
| Example 9 | 4.5 | 11.430 | 200 | 31.0 | 0.00168 | 87.7 | 18 | 19 | $2.10 \times 10^{-12}$ | $1.34 \times 10^6$ |
| Example 10 | 4.5 | 11.430 | 200 | 31.0 | 0.00168 | 87.7 | 17 | 19 | $1.88 \times 10^{-12}$ | $1.51 \times 10^6$ |
| Example 11 | 6.7 | 17.018 | 100 | 15.5 | 0.00237 | 87.0 | 29 | 12 | $3.45 \times 10^{-12}$ | $1.63 \times 10^6$ |
| Example 12 | 7.9 | 20.320 | 80 | 12.4 | 0.00264 | 86.2 | 28 | 12 | $3.22 \times 10^{-12}$ | $2.16 \times 10^6$ |
| Example 13 | 6.7 | 17.018 | 100 | 15.5 | 0.00237 | 87.0 | 29 | 15 | $4.31 \times 10^{-12}$ | $1.30 \times 10^6$ |
| Example 14 | 6 | 15.240 | 100 | 15.5 | 0.00239 | 88.4 | 28 | 16 | $4.29 \times 10^{-12}$ | $1.33 \times 10^6$ |
| Example 15 | 5.2 | 13.208 | 100 | 15.5 | 0.00241 | 89.9 | 29 | 18 | $5.18 \times 10^{-12}$ | $1.12 \times 10^6$ |
| Example 16 | 5 | 12.700 | 150 | 23.3 | 0.00195 | 88.1 | 14 | 15 | $1.01 \times 10^{-12}$ | $3.77 \times 10^6$ |
| Example 17 | 6.5 | 16.510 | 170 | 26.4 | 0.00178 | 83.8 | 15 | 15 | $1.15 \times 10^{-12}$ | $2.76 \times 10^6$ |
| Comparative Example 1 | 1.5 | 3.810 | 180 | 27.9 | 0.00186 | 96.0 | 7 | 27 | $4.52 \times 10^{-13}$ | $7.61 \times 10^6$ |
| Comparative Example 2 | 12 | 30.480 | 300 | 46.5 | 0.00116 | 62.8 | 38 | 40 | $1.97 \times 10^{-11}$ | $6.83 \times 10^4$ |
| Comparative Example 3 | 12 | 30.480 | 300 | 46.5 | 0.00116 | 62.8 | 38 | 15 | $7.41 \times 10^{-12}$ | $1.82 \times 10^5$ |
| Comparative Example 4 | 12 | 30.48 | 70 | 10.9 | 0.00273 | 80.9 | 7 | 40 | $6.70 \times 10^{-13}$ | $1.11 \times 10^7$ |

(continued)

| | Rib thickness (mil) | Rib thickness (µm) | Cell density (cpsi) | Cell density (/cm²) | Cell hydraulic diameter (d) (m) | Open frontal area (OFA) (%) | Pore size (µm) | Porosity (%) | Partition wall permeability (m²) | $d^2/P$ |
|---|---|---|---|---|---|---|---|---|---|---|
| Comparative Example 5 | 17 | 43.18 | 70 | 10.9 | 0.00260 | 73.6 | 5 | 9 | $7.69 \times 10^{-14}$ | $8.82 \times 10^7$ |
| Comparative Example 6 | 7.2 | 18.288 | 300 | 46.5 | 0.00128 | 76.6 | 6 | 27 | $3.32 \times 10^{-13}$ | $4.96 \times 10^6$ |
| Comparative Example 7 | 8 | 20.32 | 300 | 46.5 | 0.00126 | 74.2 | 5 | 32 | $2.74 \times 10^{-13}$ | $5.84 \times 10^6$ |
| Comparative Example 8 | 9 | 22.86 | 300 | 46.5 | 0.00124 | 71.3 | 5 | 32 | $2.74 \times 10^{-13}$ | $5.60 \times 10^6$ |

TABLE 3

| | Pressure loss | PM collection efficiency | Hydrostatic strength | Clogging of partition wall due to soot |
|---|---|---|---|---|
| Example 1 | Good | Good | Good | Good |
| Example 2 | Good | Good | Good | Good |
| Example 3 | Good | Good | Good | Good |
| Example 4 | Good | Good | Good | Good |
| Example 5 | Good | Good | Good | Good |
| Example 6 | Good | Good | Good | Good |
| Example 7 | Good | Good | Good | Good |
| Example 8 | Good | Good | Good | Good |
| Example 9 | Good | Good | Good | Good |
| Example 10 | Good | Good | Good | Good |
| Example 11 | Good | Good | Good | Good |
| Example 12 | Good | Good | Good | Good |
| Example 13 | Good | Good | Good | Good |
| Example 14 | Good | Good | Good | Good |
| Example 15 | Good | Good | Good | Good |
| Example 16 | Good | Good | Good | Good |
| Example 17 | Good | Good | Good | Good |
| Comparative Example 1 | Bad | Bad | Bad | Bad |
| Comparative Example 2 | Bad | Bad | Good | Bad |
| Comparative Example 3 | Bad | Bad | Good | Bad |
| Comparative Example 4 | Bad | Good | Good | Bad |
| Comparative Example 5 | Bad | Good | Good | Bad |
| Comparative Example 6 | Bad | Good | Good | Bad |
| Comparative Example 7 | Bad | Good | Good | Bad |
| Comparative Example 8 | Bad | Good | Good | Bad |

Example 18

A honeycomb structure was obtained in the same manner as in Example 1, except that the conditions were changed as shown in Table 4. A catalyst layer material (catalyst slurry) containing an oxidizing catalyst (platinum and alumina) and an organic pore-forming material (polymer particles) was applied to and supported on the surface of the partition wall of the honeycomb structure by a suction method so that the density was 200 g/ L . The honeycomb structure was dried at 600°C to oxidize and remove the organic pore-forming material. A honeycomb catalyst body including a porous catalyst layer having a number of pores and supported on the surface of the partition wall of the honeycomb structure was thus obtained.

The honeycomb catalyst body of Example 18 had a partition wall thickness of 81.3 $\mu$m (3.2 mil), a cell density of 43.4 cells/cm$^2$ (280 cpsi), a cell hydraulic diameter of 0.00144 m, a cell open frontal area of 89.6%, a partition wall average pore size of 35 $\mu$m, a partition wall porosity of 11%, a partition wall permeability of $4.61 \times 10^{-12}$, and a value "(hydraulic diameter of cells)$^2$ / (permeability)" of $4.48 \times 10^5$. The pressure loss evaluation result was "Good", the PM collection efficiency evaluation result was "Good", the partition wall strength evaluation result was "Good", the partition wall clogging evaluation result was "Good", and the exhaust gas purification performance evaluation result was also "Good".

Examples 19 to 34 and Comparative Examples 9 to 16

Honeycomb catalyst bodies of Examples 19 to 34 and Comparative Examples 9 to 16 were obtained in the same manner as in Example 18, except that the conditions were changed as shown in Table 4. The honeycomb catalyst bodies were evaluated in the same manner as described above. The measurement results are shown in Table 5, and the evaluation results are shown in Table 6.

TABLE 4

| | Main raw material | | | | | | Pore-forming material | | Filling slurry raw material (average particle size) |
|---|---|---|---|---|---|---|---|---|---|
| | Talc | Kaolin | Quartz | Fused silica | Aluminum oxide | Aluminium hydroxide | Iron powder | Graphite | |
| | mass% (average particle size) | mass% (average particle size) | mass% (average particle size) | mass% (average particle size) | mass% (average particle size) | mass% (average particle size) | mass% (average particle size) | mass% (average particle size) | |
| Example 18 | 40 (35 $\mu$m) | 19 (35 $\mu$m) | 12 (116 $\mu$m) | - | 14 (6 $\mu$m) | 15 (3 $\mu$m) | 20 (30 $\mu$m) | 0 | Cordierite ground particles (60 $\mu$m) |
| Example 19 | 40 (35 $\mu$m) | 19 (35 $\mu$m) | 12 (116 $\mu$m) | - | 14 (6 $\mu$m) | 15 (3 $\mu$m) | 20 (35 $\mu$m) | 0 | Cordierite ground particles (55 $\mu$m) |
| Example 20 | 40 (35 $\mu$m) | 19 (35 $\mu$m) | 12 (116 $\mu$m) | - | 14 (6 $\mu$m) | 15 (3 $\mu$m) | 20 (40 $\mu$m) | 0 | Cordierite ground (35 $\mu$m) particles |
| Example 21 | 40 (35 $\mu$m) | 19 (35 $\mu$m) | 12 (116 $\mu$m) | - | 14 (6 $\mu$m) | 15 (3 $\mu$m) | 20 (42 $\mu$m) | 0 | Cordierite ground (35 $\mu$m) particles |
| Example 22 | 40 (35 $\mu$m) | 19 (35 $\mu$m) | 12 (116 $\mu$m) | - | 14 (6 $\mu$m) | 15 (3 $\mu$m) | 20 (35 $\mu$m) | 0 | Cordierite ground (35 $\mu$m) particles |
| Example 23 | 40 (35 $\mu$m) | 19 (35 $\mu$m) | 12 (116 $\mu$m) | - | 14 (6 $\mu$m) | 15 (3 $\mu$m) | 20 (25 $\mu$m) | 0 | Cordierite ground (35 $\mu$m) particles |
| Example 24 | 40 (35 $\mu$m) | 19 (35 $\mu$m) | 12 (116 $\mu$m) | - | 14 (6 $\mu$m) | 15 (3 $\mu$m) | 20 (30 $\mu$m) | 0 | $\gamma$-Alumina ground (35 $\mu$m) particles |
| Example 25 | 40 (35 $\mu$m) | 19 (35 $\mu$m) | 12 (116 $\mu$m) | - | 14 (6 $\mu$m) | 15 (3 $\mu$m) | 20 (30 $\mu$m) | 0 | Cordierite ground (40 $\mu$m) particles |

| | Main raw material | | | | | | Pore-forming material | | Filling slurry raw material (average particle size) |
|---|---|---|---|---|---|---|---|---|---|
| | Talc | Kaolin | Quartz | Fused silica | Aluminum oxide | Aluminium hydroxide | Iron powder | Graphite | |
| | mass% (average particle size) | mass% (average particle size) | mass% (average particle size) | mass% (average particle size) | mass% (average particle size) | mass% (average particle size) | mass% (average particle size) | mass% (average particle size) | |
| Example 26 | 40 (35μm) | 19 (35μm) | 12 (116 μm) | - | 14 (6 μm) | 15 (3 μm) | 20 (40 μm) | 0 | Cordierite ground particles |
| Example 27 | 40 (35 μm) | 19 (35 μm) | 12 (116 μm) | - | 14 (6 μm) | 15 (3 μm) | 20 (35 μm) | 0 | Cordierite ground particles (28 μm) |
| Example28 | 40 (35 μm) | 19 (35 μm) | 12 (116 μm) | - | 14 (6 μm) | 15 (3 μm) | 20 (30 μm) | 0 | Cordierite ground particles (54 μm) |
| Example 29 | 40 (35 μm) | 19 (35 μm) | 12 (116 μm) | - | 14 (6 μm) | 15 (3 μm) | 20 (30 μm) | 0 | Cordierite ground (53 μm) particles |
| Example 30 | 40 (35 μm) | 19 (35 μm) | 12 (116 μm) | - | 14 (6 μm) | 15 (3 μm) | 20 (35 μm) | 0 | Cordierite ground (60 μm) particles |
| Example 31 | 40 (35 μm) | 19 (35 μm) | 12 (116 μm) | - | 14 (6 μm) | 15 (3 μm) | 20 (35 μm) | 0 | Cordierite ground (60 μm) particles |
| Example 32 | 40 (35 μm) | 19 (35μm) | 12 (116 μm) | - | 14 (6 μm) | 15 (3 μm) | 20 (35 μm) | 0 | Cordierite ground (55 μm) particles |
| Example 33 | 40 (35 μm) | 19 (35 μm) | 12 (116 μm) | - | 14 (6 μm) | 15 (3 μm) | 20 (35 μm) | 0 | Cordierite ground (30 μm) particles |

EP 2 239 037 B1

(continued)

| | Main raw material | | | | | | Pore-forming material | | Filling slurry raw material (average particle size) |
|---|---|---|---|---|---|---|---|---|---|
| | Talc | Kaolin | Quartz | Fused silica | Aluminum oxide | Aluminium hydroxide | Iron powder | Graphite | |
| | mass% (average particle size) | mass% (average particle size) | mass% (average particle size) | mass% (average particle size) | mass% (average particle size) | mass% (average particle size) | mass% (average particle size) | mass% (average particle size) | |
| Example 34 | 40 (35 μm) | 19 (35 μm) | 12 (116 μm) | - | 14 (6 μm) | 15 (3 μm) | 20 (35 μm) | 0 | γ-Alumina ground (30 μm) particles |
| Comparative Example 9 | 39.7 (8 μm) | 51.2 (35μm) | 0 | 0 | 18.2 (6 μm) | 0 | 0 | 0 | - |
| Comparative Example 10 | 39.7 (50 μm) | 51.2 (35 μm) | 0 | 0 | 18.2 (6 μm) | 0 | 0 | 10 (50 μm) | - |
| Comparative Example 11 | 40 (35 μm) | 19 (35 μm) | 12 (116 μm) | - | 14 (6 μm) | 15 (3 μm) | 0 | 0 | - |
| Comperative Example 12 | 39.7 (50 μm) | 51.2 (35 μm) | 0 | 0 | 18.2 (6 μm) | 0 | 0 | 10 (50 μm) | - |
| Comparative Example 13 | 40 (20 μm) | 19 (35 μm) | 12 (116 μm) | - | 14 (6 μm) | 15 (3 μm) | 0 | 0 | - |
| Comparative Example 14 | (8 μm) | 21.5 (30 μm) | 0 | 10 (30 μm) | 29.1 (6 μm) | 0 | 0 | 0 | - |
| Comparative Example 15 | 39.4 (8 μm) | 21.5 (35 μm) | 0 | 10 (30 μm) | 29.1 (6 μm) | 0 | 0 | 0 | - |
| Comparative Example 16 | 39.4 (8 μm) | 21.5 (35 μm) | 0 | 10 (30 μm) | 29.1 (6 μm) | 0 | 0 | 0 | - |

TABLE 5

| | Rib thickness | | Cell density | | Cell hydraulic diameter (d) | Open frontal area (OFA) (%) | Pore size ($\mu$m) | Porosity (%) | Partition wall permeability (m$^2$) | d$^2$/P |
|---|---|---|---|---|---|---|---|---|---|---|
| | (mil) | (mm) | (cpsi) | (/cm$^2$) | | | | | | |
| Example 18 | 3.2 | 8.1 | 280 | 43.4 | 0.00144 | 89.6 | 35 | 11 | $4.61\times10^{-12}$ | $4.48\times10^{5}$ |
| Example 19 | 3.5 | 8.9 | 250 | 38.8 | 0.00152 | 89.2 | 29 | 16 | $4.60\times10^{-12}$ | $5.01\times10^{5}$ |
| Example 20 | 4.5 | 11.4 | 180 | 27.9 | 0.00178 | 88.3 | 18 | 19 | $2.10\times10^{-12}$ | $1.50\times10^{6}$ |
| Example 21 | 4.5 | 11.4 | 200 | 31.0 | 0.00168 | 87.7 | 18 | 20 | $2.22\times10^{-12}$ | $1.28\times10^{6}$ |
| Example 22 | 4.5 | 11.4 | 200 | 31.0 | 0.00168 | 87.7 | 20 | 17 | $2.32\times 10^{-12}$ | $1.22\times10^{6}$ |
| Example 23 | 4.5 | 11.4 | 200 | 31.0 | 0.00168 | 87.7 | 18 | 10 | $1.11\times10^{-12}$ | $2.55\times10^{6}$ |
| Example 24 | 4.5 | 11.4 | 200 | 31.0 | 0.00168 | 87.7 | 18 | 12 | $1.33\times10^{-12}$ | $2.13\times10^{6}$ |
| Example 25 | 4.5 | 11.4 | 200 | 31.0 | 0.00168 | 87.7 | 22 | 12 | $1.99\times10^{-12}$ | $1.42\times10^{6}$ |
| Example 26 | 4.5 | 11.4 | 200 | 31.0 | 0.00168 | 87.7 | 18 | 18 | $1.99\times10^{-12}$ | $1.42\times 10^{6}$ |
| Example 27 | 4.5 | 11.4 | 200 | 31.0 | 0.00168 | 87.7 | 17 | 18 | $1.78\times10^{-12}$ | $1.59\times10^{6}$ |
| Example 28 | 6.7 | 17.0 | 100 | 15.5 | 0.00237 | 87.0 | 29 | 11 | $3.16\times10^{-12}$ | $1.78\times10^{6}$ |
| Example 29 | 7.9 | 20.3 | 80 | 12.4 | 0.00264 | 86.2 | 28 | 11 | $2.95\times 10^{-12}$ | $2.36\times 10^{6}$ |
| Example 30 | 6.7 | 17.0 | 100 | 15.5 | 0.00237 | 87.0 | 29 | 14 | $4.03\times10^{-12}$ | $1.40\times 10^{6}$ |
| Example 31 | 6 | 15.2 | 100 | 15.5 | 0.00239 | 88.4 | 28 | 15 | $4.02\times10^{-12}$ | $1.42\times 10^{6}$ |
| Example 32 | 5.2 | 13.2 | 100 | 15.5 | 0.00241 | 89.9 | 29 | 16 | $4.60\times10^{-12}$ | $1.26\times10^{6}$ |
| Example 33 | 5 | 12.7 | 150 | 23.3 | 0.00195 | 88.1 | 14 | 15 | $1.01\times10^{-12}$ | $3.77\times10^{6}$ |
| Example 34 | 6.5 | 16.5 | 170 | 26.4 | 0.00178 | 83.8 | 15 | 15 | $1.15\times10^{-12}$ | $2.76\times10^{6}$ |
| Comparative Example 9 | 1.5 | 3.8 | 180 | 27.9 | 0.00186 | 96.0 | 7 | 16 | $2.68\times10^{-13}$ | $1.28\times10^{7}$ |
| Comparative Example 10 | 12 | 30.5 | 300 | 46.5 | 0.00116 | 62.8 | 38 | 38 | $1.88\times 10^{-11}$ | $7.19\times10^{4}$ |
| Comparative Example 11 | 12 | 30.5 | 300 | 46.5 | 0.00116 | 62.8 | 38 | 12 | $5.92\times10^{-12}$ | $2.28\times10^{5}$ |
| Comparative Example 12 | 12 | 30.5 | 70 | 10.9 | 0.00273 | 80.9 | 7 | 38 | $6.37\times10^{-13}$ | $1.17\times10^{7}$ |

| | Rib thickness | | Cell density | | Cell hydraulic diameter (d) | Open frontal area (OFA) (%) | Pore size ($\mu$m) | Porosity (%) | Partition wall permeability (m$^2$) | d$^2$/P |
|---|---|---|---|---|---|---|---|---|---|---|
| | (mil) | (mm) | (cpsi) | (/cm$^2$) | | | | | | |
| Comparative Example 13 | 17 | 43.2 | 70 | 10.9 | 0.00260 | 73.6 | 5 | 8 | $6.84 \times 10^{-14}$ | $9.92 \times 10^7$ |
| Comparative Example 14 | 7.2 | 18.3 | 300 | 46.5 | 0.00128 | 76.6 | 6 | 25 | $3.08 \times 10^{-13}$ | $5.36 \times 10^6$ |
| Comparative Example 15 | 8 | 20.3 | 300 | 46.5 | 0.00126 | 74.2 | 5 | 30 | $2.56 \times 10^{-13}$ | $6.22 \times 10^6$ |
| Comparative Example 16 | 9 | 22.9 | 300 | 46.5 | 0.00124 | 71.3 | 5 | 31 | $2.65 \times 10^{-13}$ | $5.78 \times 10^6$ |

EP 2 239 037 B1

TABLE 6

| | Pressure loss | PM collection efficiency | Hydrostatic strength | Clogging of partition wall due to soot | Exhaust gas purification performance |
|---|---|---|---|---|---|
| Example 18 | Good | Good | Good | Good | Good |
| Example 19 | Good | Good | Good | Good | Good |
| Example 20 | Good | Good | Good | Good | Good |
| Example 21 | Good | Good | Good | Good | Good |
| Example 22 | Good | Good | Good | Good | Good |
| Example 23 | Good | Good | Good | Good | Good |
| Example 24 | Good | Good | Good | Good | Good |
| Example 25 | Good | Good | Good | Good | Good |
| Example 26 | Good | Good | Good | Good | Good |
| Example 27 | Good | Good | Good | Good | Good |
| Example 28 | Good | Good | Good | Good | Good |
| Example 29 | Good | Good | Good | Good | Good |
| Example 30 | Good | Good | Good | Good | Good |
| Example 31 | Good | Good | Good | Good | Good |
| Example 32 | Good | Good | Good | Good | Good |
| Example 33 | Good | Good | Good | Good | Good |
| Example 34 | Good | Good | Good | Good | Good |
| Comparative Example 9 | Bad | Bad | Bad | Bad | Bad |
| Comparative Example 10 | Bad | Bad | Good | Bad | Bad |
| Comparative Example 11 | Bad | Bad | Good | Bad | Bad |
| Comparative Example 12 | Bad | Good | Good | Bad | Bad |
| Comparative Example 13 | Bad | Good | Good | Bad | Bad |
| Comparative Example 14 | Bad | Good | Good | Bad | Bad |
| Comparative Example 15 | Bad | Good | Good | Bad | Bad |
| Comparative Example 16 | Bad | Good | Good | Bad | Bad |

As shown in Table 3, the honeycomb structures of Examples 1 to 17 ensured that the partition wall had a reduced thickness, but had a sufficient strength, reduced the pressure loss, and exhibited a high particulate matter collection efficiency and a high exhaust gas purification efficiency, as compared with the honeycomb structures of Comparative Examples 1 to 8. As shown in Table 6, the honeycomb catalyst bodies of Examples 18 to 34 ensured that the partition wall had a reduced thickness, but had a sufficient strength, reduced the pressure loss, and exhibited a high particulate matter collection efficiency and a high exhaust gas purification efficiency, as compared with the honeycomb catalyst bodies of Comparative Examples 9 to 16.

The method of producing a honeycomb structure according to the present invention may be used to produce a honeycomb structure that is suitable as a filter that removes particulate matter contained in exhaust gas discharged from an internal combustion engine (e.g., automobile engine, construction machine engine, or stationary industrial engine), a combustion apparatus, and the like. The method of producing a honeycomb catalyst body according to the present invention may be used to produce a honeycomb catalyst body that is suitable as a filter that removes particulate matter contained in exhaust gas discharged from an internal combustion engine (e.g., automobile engine, construction machine engine, or stationary industrial engine), a combustion apparatus, and the like.

**Claims**

1. A method of producing a honeycomb structure comprising:

   a first step that includes filling large pores formed in a primary fired body with a filling slurry that contains filling particles having an average particle size of 5 to 50 $\mu$m, the primary fired body including a porous partition wall that has a number of large pores having an average pore size of 100 to 300 $\mu$m, and a plurality of cells that are defined by the partition wall and extend between two end faces of the primary fired body, and firing the primary fired body to obtain a secondary fired body that includes a porous partition wall that has a number of pores having an average pore size smaller than that of the large pores, and a plurality of cells that are defined by the partition wall and extend between two end faces of the secondary fired body; and
   a second step that includes plugging the plurality of cells of the secondary fired body on either of the end faces or inside the plurality of cells to form plugging sections to obtain a honeycomb structure that includes the partition wall and the plugging sections, the partition wall having a thickness of 76.2 to 177.8 $\mu$m, an average pore size of 8 to 30 $\mu$m, and a porosity of 10 to 35%.

2. The method according to claim 1, wherein the honeycomb structure has a cell density of 12.4 to 45.0 cells/cm$^2$.

3. The method according to claim 1 or 2, wherein the honeycomb structure has a ratio of the total open area of the cells to the sum of the cross-sectional area of the partition wall and the total open area of the cells in a cross section perpendicular to a cell extension direction of 83 to 90%.

4. The method according to any one of claims 1 to 3, wherein the partition wall of the honeycomb structure has a permeability of $1\times10^{-12}$ to $6\times10^{-12}$ m$^2$.

5. The method according to any one of claims 1 to 4, wherein the hydraulic diameter (m) of the cells of the honeycomb structure and the permeability (m$^2$) of the partition wall of the honeycomb structure satisfy the relationship "(hydraulic diameter of cells)$^2$ / (permeability) = $1.0\times10^5$ to $4.5\times10^6$".

6. The method according to any one of claims 1 to 5, wherein the honeycomb structure is formed of a material that contains at least one ceramic selected from the group consisting of cordierite, aluminum titanate, silicon carbide, sialon, mullite, silicon nitride, zirconium phosphate, zirconia, titania, alumina, and silica.

7. The method according to any one of claims 1 to 6, wherein the honeycomb structure has a thermal expansion coefficient of $1.0\times10^{-6}$/°C or less measured at 40 to 800°C in the cell extension direction.

8. A method of producing a honeycomb catalyst body comprising: a third step that includes applying a catalyst slurry that contains an organic pore-forming material and a catalyst to the surface of a partition wall of a honeycomb structure produced by the method according to any one of claims 1 to 7, and heating the honeycomb structure to obtain a honeycomb catalyst body that includes the honeycomb structure and a catalyst layer that contains the catalyst and is supported on the surface of the partition wall of the honeycomb structure.

9. The method according to claim 8, wherein the catalyst is an oxidizing catalyst that contains at least one of platinum and palladium, and cerium oxide.

10. The method according to claim 8, wherein the catalyst is a three-way catalyst that contains at least one noble metal selected from the group consisting of platinum, rhodium, and palladium, and a promoter that contains at least one of cerium oxide and zirconium oxide.

**11.** The method according to claim 8, wherein the catalyst is a NOx occlusion/reduction catalyst that contains at least one of an alkali metal and an alkaline earth metal.

**12.** The method according to any one of claims 8 to 11, wherein the catalyst slurry further contains a promoter that contains at least one compound selected from the group consisting of alumina, zirconia, and ceria, and a holding material that holds the catalyst and the promoter.

**13.** The method according to any one of claims 8 to 12, wherein the catalyst layer of the honeycomb catalyst body has a density of 80 to 400 g/L.


**Patentansprüche**

**1.** Verfahren zur Herstellung einer Wabenstruktur, wobei das Verfahren Folgendes umfasst:

als ersten Schritt das Füllen großer, in einem primären gebrannten Körper ausgebildeter Poren mit einem Füllschlamm, der Füllpartikel mit einer durchschnittlichen Partikelgröße von 5 bis 50 $\mu$m enthält, wobei der primäre gebrannte Körper eine poröse Trennwand mit einer Anzahl großer Poren mit einer durchschnittlichen Porengröße von 100 bis 300 $\mu$m und eine Vielzahl von Zellen umfasst, die durch die Trennwand definiert sind und sich zwischen zwei Endflächen des primären gebrannten Körpers erstrecken, sowie das Brennen des primären gebrannten Körpers, um einen sekundären gebrannten Körper zu erhalten, der eine poröse Trennwand mit einer Anzahl von Poren mit einer durchschnittlichen Porengröße, die kleiner ist als die der großen Poren, und eine Vielzahl von Zellen, die durch die Trennwand definiert sind und sich zwischen zwei Endflächen des sekundären gebrannten Körpers erstrecken, aufweist; und
als zweiten Schritt das Verschließen der Vielzahl von Zellen des sekundären gebrannten Körpers auf beiden Endflächen oder im Inneren der Vielzahl von Zellen, um Verschlussabschnitte auszubilden und eine Wabenstruktur zu erhalten, die die Trennwand und die Verschlussabschnitte umfasst, wobei die Trennwand eine Dicke von 76,2 bis 177,8 $\mu$m, eine durchschnittliche Porengröße von 8 bis 30 $\mu$m und eine Porosität von 10 bis 35 % aufweist.

**2.** Verfahren gemäß Anspruch 1, worin die Wabenstruktur eine Zelldichte von 12,4 bis 45,0 Zellen/cm$^2$ aufweist.

**3.** Verfahren gemäß Anspruch 1 oder 2, worin die Wabenstruktur ein Verhältnis der gesamten offenen Fläche der Zellen zur Summe der Querschnittsfläche der Trennwand und der gesamten offenen Fläche der Zellen in einem Querschnitt im rechten Winkel auf die Richtung der Zellausdehnung von 83 bis 90 % aufweist.

**4.** Verfahren gemäß einem der Ansprüche 1 bis 3, worin die Trennwand der Wabenstruktur eine Permeabilität von $1 \times 10^{-12}$ bis $6 \times 10^{-12}$m$^2$ aufweist.

**5.** Verfahren gemäß einem der Ansprüche 1 bis 4, worin der hydraulische Durchmesser (m) der Zellen der Wabenstruktur und die Permeabilität (m$^2$) der Trennwand der Wabenstruktur dem Verhältnis "(hydraulischer Zelldurchmesser)$^2$ /(Permeabilität) = $1,0 \times 10^5$ zu $4,5 \times 10^6$" entsprechen.

**6.** Verfahren gemäß einem der Ansprüche 1 bis 5, worin die Wabenstruktur aus einem Material ausgebildet ist, das mindestens eine Keramik, ausgewählt aus der Gruppe bestehend aus Cordierit, Aluminiumtitanat, Siliziumkarbid, Sialon, Mullit, Siliziumnitrid, Zirkoniumphosphat, Zirconiumoxid, Titandioxid, Aluminiumoxid und Siliziumdioxid, enthält.

**7.** Verfahren nach einem der Ansprüche 1 bis 6, worin die Wabenstruktur einen Wärmeausdehnungskoeffizienten von $1,0 \times 10^{-6}$/°C oder weniger, gemessen bei 40 bis 800 °C in die Richtung der Zellausdehnung aufweist.

**8.** Verfahren zur Herstellung eines Wabenkatalysatorkörpers, umfassend: als dritten Schritt das Auftragen einer Katalysatoraufschlämmung, die ein organisches porenbildendes Material und einen Katalysator enthält, auf die Oberfläche einer Trennwand einer Wabenstruktur, erzeugt durch das Verfahren gemäß einem der Ansprüche 1 bis 7, und das Erhitzen der Wabenstruktur, um einen Wabenkatalysatorkörper zu erhalten, der die Wabenstruktur und eine Katalysatorschicht umfasst, die den Katalysator enthält und auf der Oberfläche der Trennwand der Wabenstruktur aufliegt.

**9.** Verfahren gemäß Anspruch 8, worin der Katalysator ein oxidierender Katalysator ist, der mindestens eines von Platin und Palladium sowie von Ceroxid enthält.

**10.** Verfahren gemäß Anspruch 8, worin der Katalysator ein Dreiwegkatalysator ist, der mindestens ein Edelmetall, ausgewählt aus der Gruppe bestehend aus Platin, Rhodium und Palladium, sowie einen Promotor enthält, der mindestens eines von Ceroxid und Zirkonoxid beinhaltet.

**11.** Verfahren gemäß Anspruch 8, worin der Katalysator einen Katalysator zur Okklusion/Reduktion von NOx ist, der ein Alkalimetall und/oder ein Erdalkalimetall enthält.

**12.** Verfahren gemäß einem der Ansprüche 8 bis 11, worin die Katalysatoraufschlämmung ferner einen Promotor enthält, der mindestens eine Verbindung, ausgewählt aus der Gruppe bestehend aus Aluminiumoxid, Zirkonoxid und Ceroxid, und ein Trägermaterial, das den Katalysator und den Promotor trägt, enthält.

**13.** Verfahren gemäß einem der Ansprüche 8 bis 12, worin die Katalysatorschicht des Wabenkatalysatorkörpers eine Dichte von 80 bis 400 g/l aufweist.

**Revendications**

**1.** Procédé de fabrication d'une structure en nid d'abeille comprenant :

une première étape qui comprend le remplissage de pores de grande taille formés dans un corps cuit primaire avec une suspension de remplissage qui contient des particules de remplissage ayant une granulométrie moyenne de 5 à 50 $\mu$m, le corps cuit primaire comprenant une cloison de séparation poreuse qui a un certain nombre de pores de grande taille ayant une taille de pore moyenne de 100 à 300 $\mu$m, et une pluralité d'alvéoles qui sont définis par la cloison de séparation et qui s'étendent entre deux faces d'extrémité du corps cuit primaire, et la cuisson du corps cuit primaire pour obtenir un corps cuit secondaire qui comprend une cloison de séparation poreuse qui a un certain nombre de pores ayant une taille de pore moyenne inférieure à celle des pores de grande taille, et une pluralité d'alvéoles qui sont définis par la cloison de séparation et qui s'étendent entre deux faces d'extrémité du corps cuit secondaire; et
une deuxième étape qui comprend le colmatage de la pluralité d'alvéoles du corps cuit secondaire sur l'une des faces d'extrémité ou à l'intérieur de la pluralité d'alvéoles pour former des sections de colmatage afin d'obtenir une structure en nid d'abeille qui comprend la cloison de séparation et les sections de colmatage, la cloison de séparation ayant une épaisseur de 76,2 à 177,8 $\mu$m, une taille de pore moyenne de 8 à 30 $\mu$m, et une porosité de 10 à 35 %.

**2.** Procédé selon la revendication 1, dans lequel la structure en nid d'abeille a une densité d'alvéoles de 12,4 à 45,0 alvéoles/cm$^2$.

**3.** Procédé selon la revendication 1 ou 2, dans lequel la structure en nid d'abeille a un rapport entre la surface ouverte totale des alvéoles et la somme de la surface de la section transversale de la cloison de séparation et de la surface ouverte totale des alvéoles dans une section transversale perpendiculaire à une direction d'extension des alvéoles de 83 à 90 %.

**4.** Procédé selon l'une quelconque des revendications 1 à 3, dans lequel la cloison de séparation de la structure en nid d'abeille a une perméabilité de 1 x 10$^{-12}$ à 6 x 10$^{-12}$ m$^2$.

**5.** Procédé selon l'une quelconque des revendications 1 à 4, dans lequel le diamètre hydraulique (m) des alvéoles de la structure en nid d'abeille et la perméabilité (m$^2$) de la cloison de séparation de la structure en nid d'abeille satisfont la relation « (diamètre hydraulique des alvéoles)$^2$ / (perméabilité) = 1,0 x 10$^5$ à 4,5 x 10$^6$».

**6.** Procédé selon l'une quelconque des revendications 1 à 5, dans lequel la structure en nid d'abeille est fabriquée à partir d'un matériau qui contient au moins une céramique choisie dans le groupe constitué de la cordiérite, du titanate d'aluminium, du carbure de silicium, du sialon, de la mullite, du nitrure de silicium, du phosphate de zirconium, de la zircone, du dioxyde de titane, de l'alumine et de la silice.

**7.** Procédé selon l'une quelconque des revendications 1 à 6, dans lequel la structure en nid d'abeille a un coefficient d'expansion thermique de 1,0 x 10$^6$/°C ou moins mesuré à une température de 40 à 800 °C dans la direction d'extension des alvéoles.

8. Procédé de formation d'un corps de catalyseur en nid d'abeille comprenant :

une troisième étape qui comprend l'application d'une suspension catalytique qui contient un matériau porogène organique et un catalyseur sur la surface d'une cloison de séparation d'une structure en nid d'abeille fabriquée par le procédé selon l'une quelconque des revendications 1 à 7, et le chauffage de la structure en nid d'abeille pour obtenir un corps de catalyseur en nid d'abeille qui comprend la structure en nid d'abeille et une couche catalytique qui contient le catalyseur et qui est supportée sur la surface de la cloison de séparation de la structure en nid d'abeille.

9. Procédé selon la revendication 8, dans lequel le catalyseur est un catalyseur oxydant qui contient au moins un élément parmi le platine et le palladium, et de l'oxyde de cérium.

10. Procédé selon la revendication 8, dans lequel le catalyseur est un catalyseur à trois voies qui contient au moins un métal noble choisi dans le groupe constitué du platine, du rhodium et du palladium, et un promoteur qui contient au moins un composé parmi l'oxyde de cérium et l'oxyde de zirconium.

11. Procédé selon la revendication 8, dans lequel le catalyseur est un catalyseur d'occlusion/réduction des NOx qui contient au moins un métal parmi un métal alcalin et un métal alcalino-terreux.

12. Procédé selon l'une quelconque des revendications 8 à 11, dans lequel la suspension catalytique contient en outre un promoteur qui contient au moins un composé choisi dans le groupe constitué de l'alumine, de la zircone et de l'oxyde de cérium, et un matériau de retenue qui retient le catalyseur et le promoteur.

13. Procédé selon l'une quelconque des revendications 8 à 12, dans lequel la couche catalytique du corps de catalyseur en nid d'abeille a une densité de 80 à 400 g/l.

FIG.1

EP 2 239 037 B1

FIG.2

FIG.3

FIG.4

FIG.5

300

EP 2 239 037 B1

FIG.6

FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003033664 A

- JP 2001269585 A